(19) Europäisches Patentamt
European Patent Office
Office européen des brevets

(11) Publication number: **0 201 578 B1**

# (12) EUROPEAN PATENT SPECIFICATION

(45) Date of publication of patent specification: **02.11.89**

(51) Int. Cl.[4]: **C 09 K 19/58,** C 07 C 69/00, C 09 K 19/20

(21) Application number: **85905852.1**

(22) Date of filing: **08.11.85**

(86) International application number: **PCT/GB85/00512**

(87) International publication number: **WO 86/02938 22.05.86 Gazette 86/11**

## (54) ALPHA-HYDROXY CARBOXYLIC ACID DERIVATIVES SUITABLE FOR USE IN LIQUID CRYSTAL MATERIALS AND DEVICES.

(30) Priority: **13.11.84 GB 8428653**
**11.01.85 GB 8500765**

(43) Date of publication of application: **20.11.86 Bulletin 86/47**

(45) Publication of the grant of the patent: **02.11.89 Bulletin 89/44**

(84) Designated Contracting States: **AT CH DE FR GB IT LI NL**

(56) References cited:
**FR-A-2 380 574**
**US-A-3 664 841**

(73) Proprietor: **The Secretary of State for Defence in Her Britannic Majesty's Government of the United Kingdom of Great Britain and Northern Ireland Whitehall London SW1A 2HB (GB)**

(73) Proprietor: **STC PLC 10, Maltravers Street London, WC2R 3HA (GB)**

(72) Inventor: **CHAN, Lawrence, Kam, Ming 112 Lee Street Holderness Road Hull North Humberside HU8 8NN (GB)**
Inventor: **COATES, David 12 Blackbushe Bishop's Stortford Hertfordshire CM23 5EY (GB)**
Inventor: **GEMMELL, Peter, Alan 71 The Knoll Palace Fields Runcorn Cheshire WA7 2UH (GB)**
Inventor: **GRAY, George, William Glenwood Newgate Street Cottingham North Humberside HU16 4DY (GB)**
Inventor: **LACEY, David 19 Kildale Close Hull North Humberside HU8 9NW (GB)**
Inventor: **TOYNE, Kenneth, Johnson 25 Hall Road Hull North Humberside HU6 8QW (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 201 578 B1

(72) Inventor: YOUNG, Daniel, James, Stephen
2 York Way
Conisbrough Doncaster
Yorkshire DN12 3BG (GB)

(74) Representative: Beckham, Robert William et al
Procurement Executive Ministry of Defence
Patents 1A(4), Room 2014
Empress State Building Lillie Road London SW6 1TR (GB)

**Description**

The present invention relates to derivatives of α-hydroxy carboxylic acids suitable for use in liquid crystal materials and devices.

In particular the invention relates to ferroelectric liquid crystal materials, which show a tilted chiral smectic liquid crystal mesophase. Such materials have been proposed for use in rapidly switched electro-optical devices, for example processing and storage devices and displays, based on the ferroelectric properties of the material in the tilted chiral smectic phase, e.g. as described by N. A. Clark and S. T. Lagerwall in 'App. Phys. Lett.' *36* p.899, (1980) (Reference 1).

A measure of the effectiveness of a ferroelectric liquid crystal material is its spontaneous polarisation coefficient Ps. It is desirable to have as high a Ps as possible in a ferroelectric liquid crystal material for electro-optical applications, whilst also combining this high Ps with the other desirable properties generally sought in liquid crystal materials e.g. low viscosity, broad liquid crystal phase range, stability, etc. The tilted smectic phases which exhibit ferroelectric behaviour are the chiral C, F, G, H, I, J, and K phases (designed hereinafter as $S^*_C$, $S^*_F$ etc., the asterisk indicating chirality). The S*c phase is most commonly sought as this is the most fluid. It is also desirable that the liquid crystal materials show an $S_A$ phase at a temperature above its S* phase, as this assists surface alignment in the device.

Although some liquid crystal compounds show S* phases embodying many of the desirable properties outlined above, it is common in practice to use a material which is a mixture of at least two components, or sets of components, i.e. a 'host' which exhibits a smectic phase which may or may not be chiral, and a 'dopant' which is mixed with the host to produce a tilted chiral smectic phase with a high Ps. The dopant may also serve to improve other properties of the host or mixture to produce an advantageous ferroelectric mixture.

In contast to research on nematic liquid crystals, relatively little is known about desirable molecular structures for S* compounds and materials. Many materials which are at present used in ferroelectric displays have low Ps values or are chemically unstable, such as the compounds DOBAMBC and HOBACPC described in Ref. 1.

Hosts and dopants used in ferroelectric smectic liquid crystal materials are often organic compounds which contain a chiral unit (asymmetrically substituted carbon atom). A known chiral unit is the lactate diester unit:

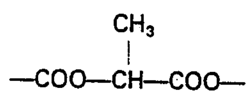

(herein abbreviated 'L'). Compounds are known which incorporate this unit, including the yellow dyes used in photography described in FR—A—2380574, i.e.

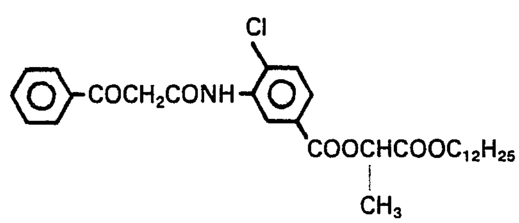

and in US—3,664,841, i.e.

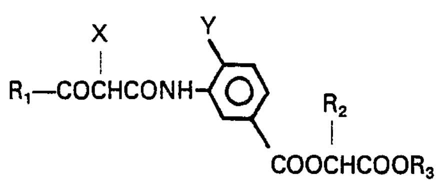

where X is hydrogen or halogen, Y is hydrogen, lower alkyl, lower alkyl, lower alkoxy, aryloxy or halogen, $R_1$ is test-butyl or phenyl, $R_2$ is hydrogen or $C_{1-14}$ alkyl, $R_3$ is $C_{1-18}$ alkyl. These compounds are not described as having any liquid crystalline character.

It is an object of the present invention to provide a new range of S* ferroelectric liquid crystal materials having improved properties. Other objects and advantages of the present invention will be apparent from the following description.

According to the present invention there is provided a compound which may be used as a host or dopant in a ferroelectric chiral smectic liquid crystal mixture, the compound being a derivative of lactic acid, and having a Formula I:

Formula I

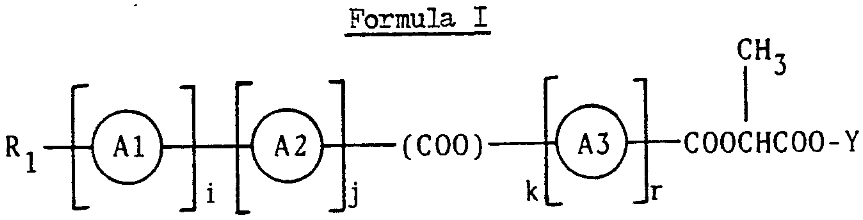

wherein 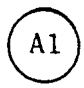 represents 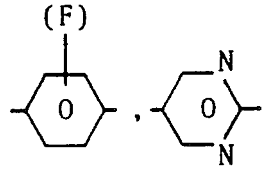 or 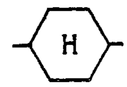;

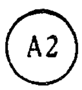 represents 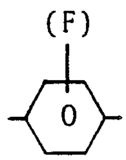, and

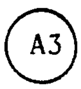 represents 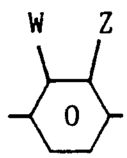 or 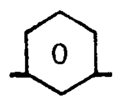;

wherein i, j, k and r are 0 or 1; wherein W and Z are independently selected from hydrogen or halogen; wherein Y represents a group selected from

$C_{1-20}$- alkyl, 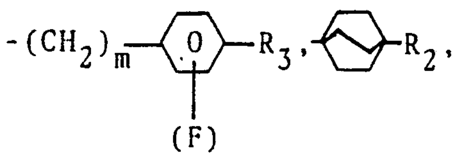 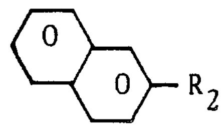

, 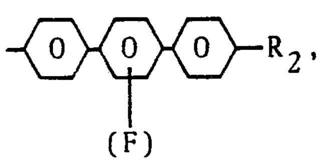 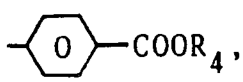 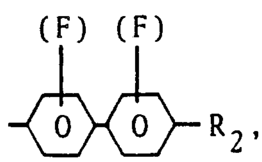 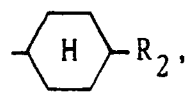

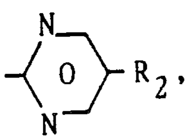 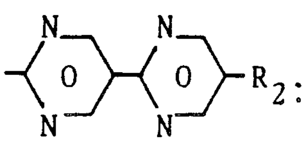

wherein $R_1$ and $R_2$ are independently hydrogen or alkyl or alkoxy together containing up to 25 carbon atoms, $R_3$ may be $R_2$ or halogen, $R_4$ is alkyl, (F) indicates that a fluorine substituent may be present on the ring, m is 0, 1 or 2;

provided that if r is 0 then k is 0; and provided that if

(A3) is 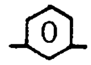

then k is 1 and if i is 1 then

(A1) is 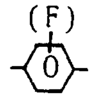 ;

and provided that if k is 0 and j is 1 then

(A1) is not 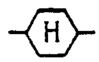 ;

and provided that the compound contains 2, 3 or 4 cyclic groups

(A1) , (A2) or (A3)

or the cyclic groups contained in Y.

When the compound of Formula I contains a cyclohexyl ring, this ring is preferably in the *trans*-configuration. When $R_3$ is a halogen it is preferably fluorine. When $R_1$ and/or $R_2$ are alkyl or alkoxy they preferably each contain up to 20 carbon atoms, preferably $R_1$ and/or $R_2$ are or contain an unbranched or chiral alkyl chain. It is particularly preferred that $R_1$ is n-alkyl or n-alkoxy containing 5 to 12 carbon atoms and that $R_2$ is n-alkyl containing 1 to 5 carbon atoms. When $R_1$ or $R_2$ is chiral, they preferably are (+) or (−)2-methyl butyl, (+) or (−)2-methyl butoxy, 2-octyl, 2-heptyl or 2-nonyl.

When Y is n-alkyl, then it is preferably ethyl.

In this description:

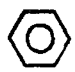 represents phenyl

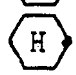 represents *trans* cyclohexyl,

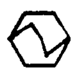 represents bicyclo (2,2,2) octane

—L— in a formula represents —COO—CH($CH_3$)—COO—.

Examples of preferred structural forms of Formula I are represented by the formulae shown in Table 1 below.

Table 1.

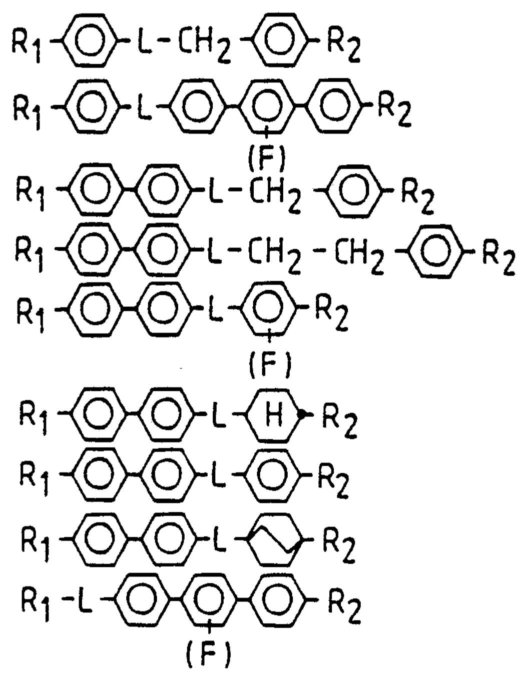

Table 1 (contd.)

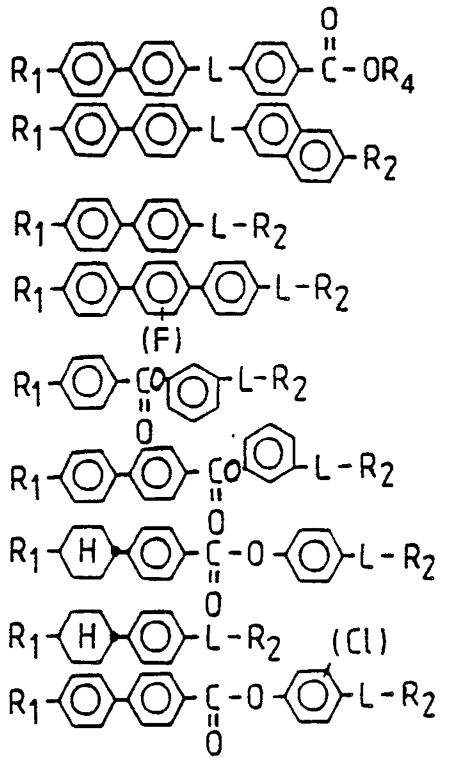

where (F) and (Cl) in the formulae indicate that the ring may carry one or more of the bracketed substituents.

Particularly preferred structures are those in which the group:

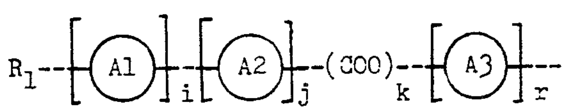

(hereinafter abbreviated to "X") is selected from:

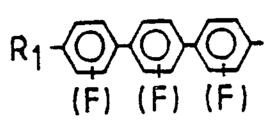

and

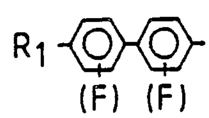

whee $R_1$ is n-alkoxy, especially $C_5$—$C_{12}$ alkoxy.

It appears to be particularly beneficial for Y to be n-alkyl, particularly $C_1$—$C_5$ n-alkyl.

For example compounds of the type:

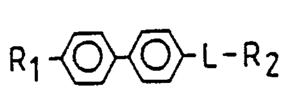

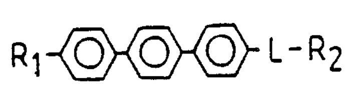

where $R_1$ and $R_2$ are $C_5$—$C_{12}$ alkoxy and $C_1$—$C_5$ alkyl respectively show very high Ps values when added to tilted smectic hosts.

Structures for Y which contain a single cyclic group, or a single naphthyl unit, directly bonded to the L group also often lead to compounds of Formula I which show a high Ps value in a tilted smectic host.

Other examples of structures included in the present invention include those listed in table 2 below, in which the phenyl rings shown may carry lateral substituents as indicated in Formula I above and 'L' represents a group —COO—CH—($CH_3$)COO—.

Table 2

| | |
|---|---|
| 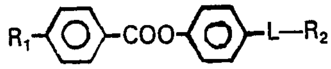 | 2.1 |
| 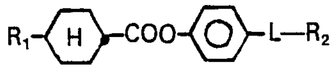 | 2.2 |
| 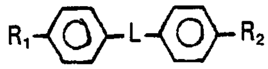 | 2.3 |
| 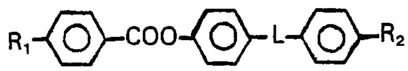 | 2.4 |
| 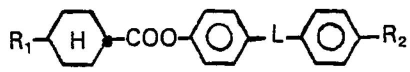 | 2.5 |
| 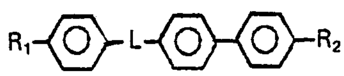 | 2.6 |
| 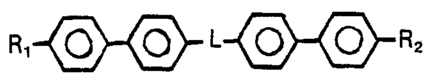 | 2.7 |
| 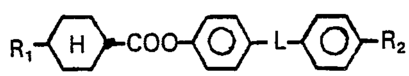 | 2.8 |
| 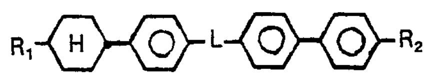 | 2.9 |
| 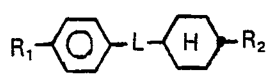 | 2.10 |
| 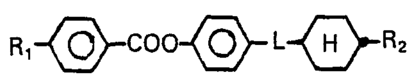 | 2.11 |
| 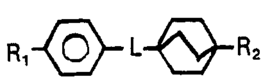 | 2.12 |
| 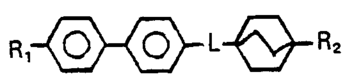 | 2.13 |

Lactic Acid derivatives of Formula I may be prepared by a number of preparative methods.

*Method 1*

For example they may be made from lactic acid ($HO.CH(CH_3)CO.OH$) by two esterifications as in Route a or Route b as follows wherein each Q independently represents a suitable reactive group normally used in esterifications, e.g. chloride.

*Route a*

X—CO.HO

↓

X—CO.Q + $HO.CH.(CH_3)CO.OH$

↓

X—CO.O.$CH(CH_3)$.CO.OH

↓

X—CO.O.$CH(CH_3)$.CO.Q + Y.OH

↓

X—CO.O.$CH(CH_3)$.CO.OY

*Route b*

$HO.CH(CH_3)CO.OH + Y—OH$ → $HO.CH(CH_3)CO.O—Y$

$X—CO.OH$ → $X—CO.Q$

$HO.CH(CH_3)CO.O—Y + X—CO.Q$ → $X—CO.O.CH(CH_3)CO.O—Y$

Preferably the compounds of Formula I are made by Route b.

The esterification steps are carried out by steps which are well known to those skilled in the art, e.g. in the presence of a suitable base such as triethylamine.

*Method 2*

An alternative esterification route, again using lactic acid is route C below:

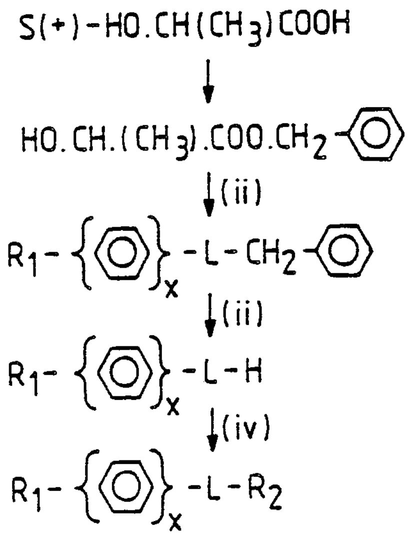


where

—L— = —COO—CH($CH_3$)COO—,

$R_1$ = alkyl or alkoxy, e.g. $C_8H_{17}O$,

$R_2$ = alkyl, substituted alkyl, cycloalkyl or phenyl,

x = 1 or 2,

(i) 20% $Cs_2CO_3$, 90% MeOH, pH 7; $Ph.CH_2Br$, DMF,

(ii) 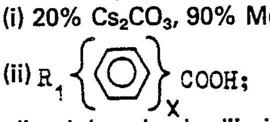

NN'-dicyclohexylcarbodiimide (DCC), 4-(N-pyrrolidino)-pyridine (N-PPy), $CHCl_2$,

(iii) 5% Pd-C, ethyl acetate, hydrogen,

(iv) $R_2OH$, DCC, N-PPy, $CH_2Cl_2$.

*Method 3*

In some cases problems may be encountered in the use of the difunctional lactic acid, so alternative routes d and e below may be used, which employ a commercially available alkyl lactate, e.g. S-(−)-$HO.CH.(CH_3).CO_2.C_2H_5$. By these routes $R_2$ will be the alkyl group of the alkyl lactate. Routes d and e are

particularly suited to the preparation of compounds of Formula I containing a *trans*-cyclohexyl ring, as exemplified below:

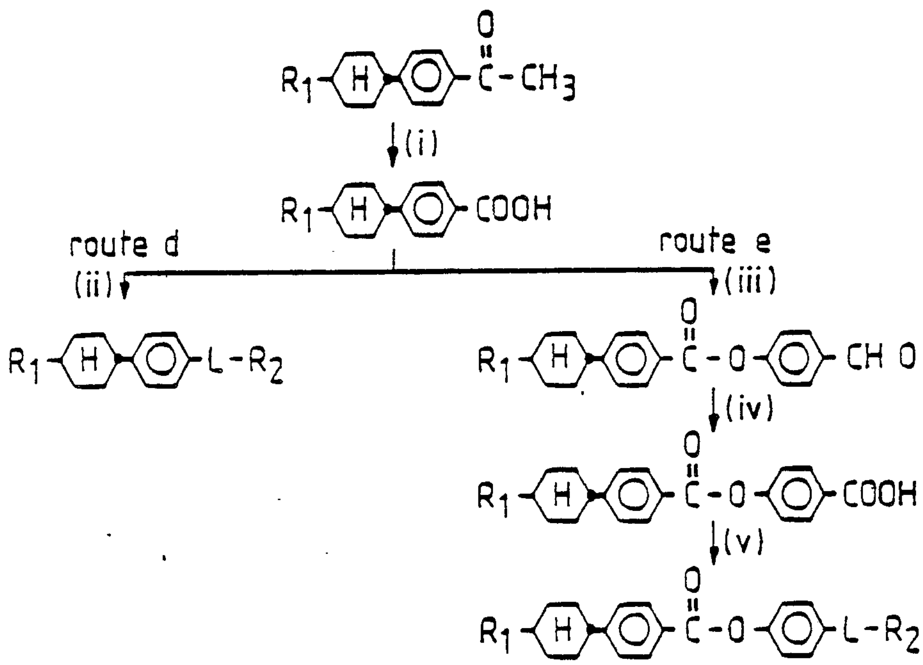


(i) $Br_2$, NaOH, Dioxan; $H^+$,
(ii) DCC, $R_2$—S-(−)-lactate, N-PPy, $CH_2Cl_2$,
(iii) DCC, 4-hydroxybenzaldehyde, N-PPy, $CH_2Cl_2$,
(iv) $CrO_3$ oxidation,
(v) similar to (ii).

*Method 4*

A method suitable for the preparation of terphenyls of Formula I is route f exemplified below:

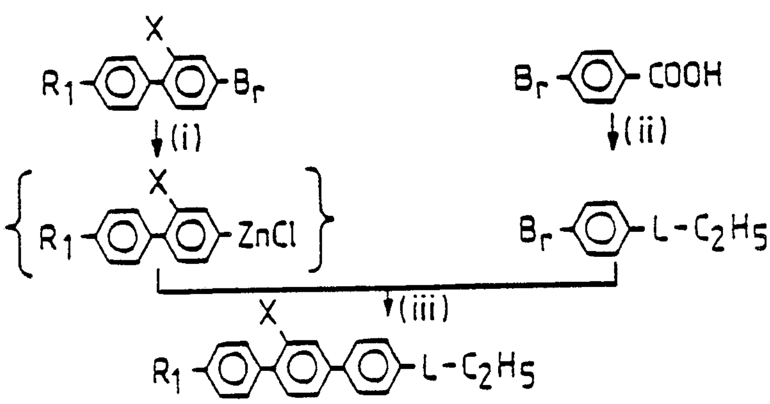


(i) when X = F; n-BuLi, ether, −35°C, 20 min; $ZnCl_2$, THF, $N_2$,
when X = H; n-BuLi, ether, −5°C to −10°C, 45 min; $ZnCl_2$, THF, $N_2$,
(ii) S-(−)-ethyl lactate, DCC, N-PPy, $CH_2Cl_2$,
(iii) $Pd[Ph_3P]_2Cl_2$ di-isobutylaluminium hydride, THF, $N_2$.

The various carboxylic acids X—COOH and phenols/alcohols Y—OH, and compounds analogous to the various starting materials or intermediates of routes c, d, e and f are known or may be obtained from known compounds by a simple literature route, for example carboxylic acids may be obtained from the corresponding nitriles by hydrolysis.

Examples of such compounds are those having the generalised structures listed below in Table 3, wherein $R_2$ and $R_2$ are as defined above. To prepare compounds of Formula I having a required substitution pattern, appropriately substituted analogues of these compounds may be used.

Table 3

| Phenols | Alcohols | Carboxylic Acids |
|---|---|---|
| 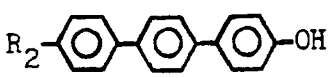 | 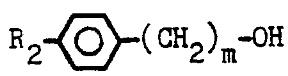 | 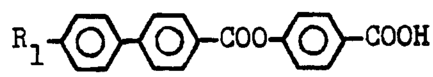 |
| 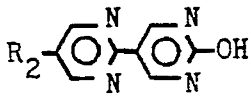 | $R_2$-OH | 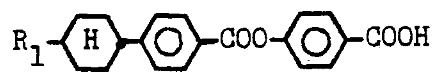 |
| 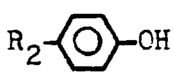 | 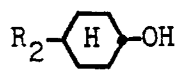 | 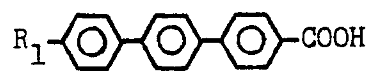 |
| 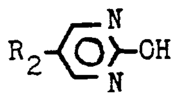 | 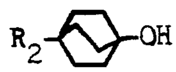 | 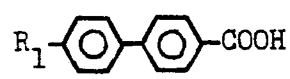 |
| 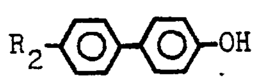 | | 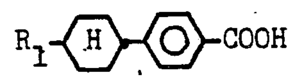 |
| | | 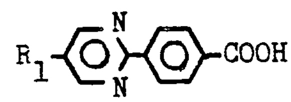 |
| | | 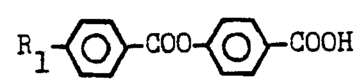 |
| | | 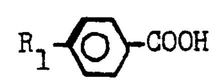 |
| | | 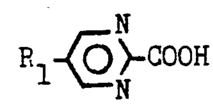 |
| | | 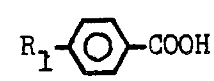 |

The compounds of Formula I may be isolated in an optically active (chiral) form, in which case the starting lactic acid in Routes (a) to (f) is the corresponding (S)- or (R)-isomer, or in a racemic form, in which case the starting lactic acid is racemic. All forms of lactic acid are commercially available.

Where an optically active product is required from routes a to f, the intermediate products, as well as the final products, are checked to ensure that their optical activity is not destroyed by racemisation during the esterification steps.

The compounds of the invention may show one or more of the desirable ferroelectric tilted S* phases with a high Ps referred to above by themselves and in such cases may be used as hosts ferroelectric liquid crystal materials. Some of the compounds of the invention may even show ferroelectric S*c phases at room temperature, for example some of the compounds listed in Table 11. Alternatively compounds of the invention which show a high Ps by themselves may be mixed with one or more other compounds of the invention to produce a ferroelectric mixture with a melting point lower than any of the individual compounds, by the well known cryoscopic effect.

Their principal use however is normally as a chiral dopant to induce or improve a ferroelectric liquid crystal phase in a host material. The host may itself show a tilted S* phase, or may show such a phase when mixed with one or more compounds of Formula I. In such a case the compound of may or may not itself show a smectic phase. The mixing of one or more compounds of the invention with a host may improve a number of properties of the host material, for example the Ps, the temperature range of S* phases, or the pitch of the helical or twisted configuration of the S* phase.

One of the main advantages of the compounds of the invention is their ability to induce a high Ps in a tilted smectic mixture. It is believed that this may be due to the fact that free rotation of the chiral centre in the α-hydroxy carboxylic acid group relative to the 'molecular core' i.e. the group X or Y, or the

combination of X and Y, is hindered, largely by the bonding of the chiral centre to the molecular core by ester links (—COO— and —OOC—). This is especially so when $S^7$ and/or $S^8$ are single covalent bonds so that a ring is linked to the chiral centre directly by an ester link.

When a ring in the molecular core is next to the α-hydroxycarboxylic acid group the presence of bulky substituents on ring positions adjacent to the acid group also sterically hinders rotation of the chiral centre relative to the core and may also contribute to the inducement of a high Ps, but this latter effect is less reliable.

This provides a method of determining the usefulness of the compound of the invention, for example measurement of the Ps of the compound. In practice the Ps of a solution of the compounds in a host material, e.g. a racemic smectic host which shows a Ps of *ca* without any of the compound is measured, and an 'extrapolated Ps' for the pure compound of the invention is derived from this by known methods. It has been observed that in many cases a high extrapolated Ps is found in a compound of Formula I which shows a high optical rotation angle.

A wide range of suitable host materials is known, with which compounds of the invention may be mixed. Some examples are:

(a) The compounds and compositions disclosed in European Patent Application 0110299A2.

(b) The compounds and compositions disclosed in Mol. Cryst. Liq. Cryst. *37*, 157 (1976), e.g. esters having a central core of the structure:

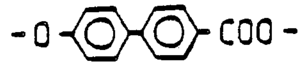

(c) The known compounds of formula:

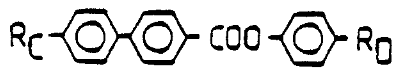

(or mixtures of them, which may be a racemic mixture) where $R_C$ and $R_D$ independently represent n-alkyl or n-alkoxy at least one of which is a chiral group. For example where $R_C$ = n-$C_8H_{17}$ and $R_D$ = (+)-2 methylbutyl the compound is commercially available from BDH Chemicals Ltd, Broom Road, Poole, Dorset, U.K.

(d) The compounds and compositions disclosed in U.K. Patent Application 8501509, for example those of formulae Ia to Ih on p.2 of that application such as:

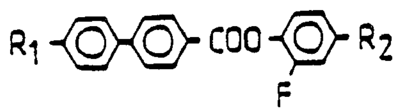

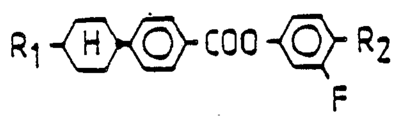

(e) The known compounds, or mixtures thereof, having a formula

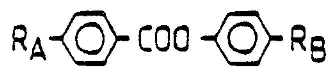

where one of $R_A$ and $R_B$ represents $C_{5-12}$n-alkoxy and the other represents $C_{7-12}$n-alkyl or n-alkoxy. These compounds are non chiral.

(f) The known compound PG 495

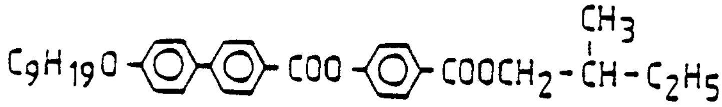

(g) The known compounds

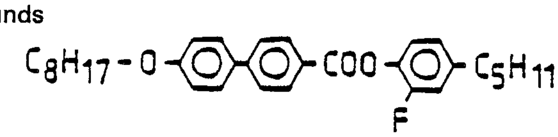

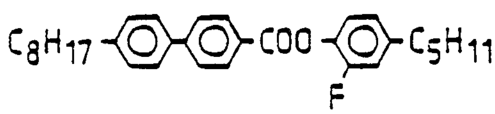

or mixtures of them.

Both (f) and (g) above are available for BDH Chemicals Ltd.

Other suitable smectic host materials which may be mixed with compounds of Formula I will be apparent to those skilled in the art.

A mixture which contains one or more compounds of the invention, and exhibits a chiral smectic phase may have added to it one or more additives to engineer other preferred properties for a particular device such as viscosity, dielectric anisotropy, birefringerence, pitch, elastic constants, melting point, clearing point etc. Additives showing a weak longitudinal dipole moment (e.g. compounds containing alkyl and/or alkoxy terminal groups) are preferred. Preferably they show a lateral dipole moment (e.g. by containing a lateral halogen, $CF_3$ or CN substituent).

In the field of smectic liquid crystal chemistry relatively little is known about the structural requirements for miscibility and it is therefore somewhat difficult to predict which compounds will form stable mixtures with smectic phases. It may thus be necessary to carry out some relatively straightforward experiments to determine whether a particular combination of compounds such as a host, or additives as discussed above will form a stable mixture. Such experiments may in many cases comprise no more than melting a combination of compounds together (if they are not liquid at room temperature) and observing the appearance or otherwise of smectic phases by known methods such as optical microscopy.

Most research to date in this relatively new field has been concentrated on finding good working combinations of host and dopant and it is expected that future work will be directed towards retiring and improving those combinations with additives.

There are some signs that compounds which have the same or a closely related molecular core or combination of cyclic groups and linking groups in their structure will be miscible, for example the compound PG 495 is miscible with its analogue having the 2-methylbutyl ester group replaced by a lactate-ethyl ester. That this principle is not absolutely rigid is demonstrated by the wide range of compounds which are miscible with PG 495 and RCE 8 in tables 7 to 12.

Some possible examples of additives are given in Tables 4, 5 and 6 below, but it must be understood that this is only a general guide and experiments should be carried out in all cases to investigate suitability.

Examples of the families of compounds which may be added to a mixture containing a compound of the invention together with one or more of the tilted smectic compounds or materials such as (a) to (e) described above to produce a room temperature smectic C phase are shown in Table 4.

Table 4

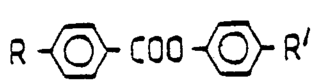
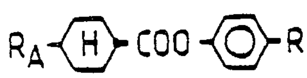
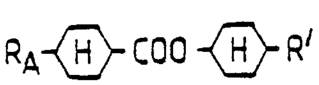
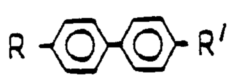
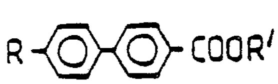
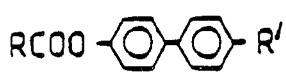

where R and R′ are alkyl or alkoxy and $R_A$ is alkyl. Preferably R is $C_{5-12}$ n-alkyl or n-alkoxy or $C_{5-12}$ branched alkyl or alkoxy containing an asymmetrically substituted carbon atom e.g. 2-methylbutyl.

Examples of low melting and/or low viscosity additives are the compounds shown in Table 5.

Table 5

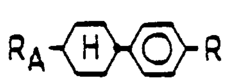
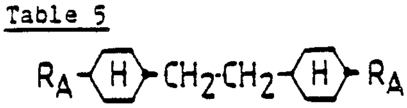
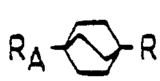
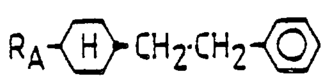
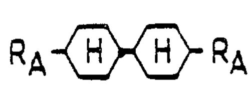
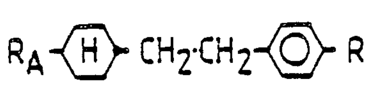

where each R is independently alkyl or alkoxy, e.g. $C_{1-18}$ n-alkyl or n-alkoxy, and each $R_A$ is independently alkyl, e.g. $C_{1-18}$ n-alkyl.

Examples of high clearing point additives are the compounds shown in Table 6.

Table 6

| | |
|---|---|
| 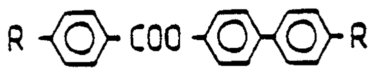 | 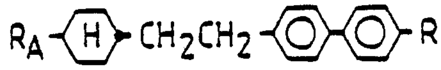 |
| 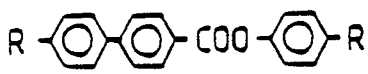 | 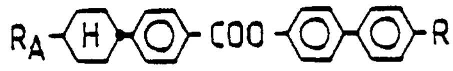 |
| 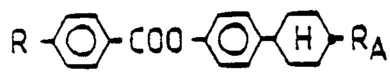 | 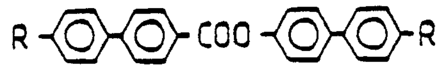 |
| 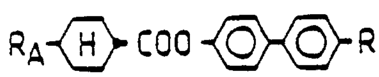 | 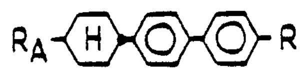 |
| 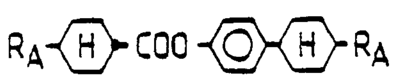 | 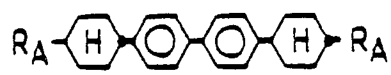 |

where R is alkyl or alkoxy, e.g. $C_{1-12}$ alkyl or alkoxy and $R_A$ is alkyl, e.g. $C_{1-12}$ or a fluorinated analogue of one of these compounds.

An example of a mixture according to this aspect of the invention is the following:

| | |
|---|---|
| (i) A component comprising one or more of the compounds (a) to (g) described above. | 25—75 mol % |
| (ii) A component comprising one or more of the compounds in Table 4 above. | 0—30 mol % |
| (iii) A component comprising one or more of the compounds in Table 5 above. | 0—30 mol % |
| (iv) A component comprising one or more of the compounds in Table 6 above. | 0—30 mol % |

The amount of each compound made up to 100% with one or more compounds of the invention contained in the mixtures of the invention depends on the properties required of the mixture, including the Ps value and the pitch of the molecular configuration in the chiral smectic phase. When the compound of the invention induces an increased Ps in the host, the Ps value induced generally increases with the amount of the compound of which is present in the host.

Alternatively or additionally some compounds of the invention may be capable of acting as hosts, in which case they may be optically active or racemic, to which a suitable dopant may be added (which may be a different compound of Formula I), and other additives such as those exemplified in Tables 4, 5 and 6 may be added to the mixture.

Where a mixture is formed by mixing a first component comprising one or more compounds of the invention with a second component which may itself comprise one or more of the invention and which is also chiral the respective molecular twist senses of or induced by the two components may be the same or opposed. Where the two senses are opposed the resultant mixture shows a longer helical pitch than those of the two components (if separately chiral smectic). The sense of the twist is the same as the component of shorter pitch, i.e. the more powerful twist, for a mixture of equal amounts of two chiral smectic components. By means of this principle the pitch of a mixture may be tuned as appropriate for its intended application. It is possible by this method to produce a mixture in which the respective twist sense of the components cancel each other out, to produce a mixture of effectively infinite pitch.

In a mixture it is also possible for the respective senses of polarisation (as defined in Fig. 1), i.e. (+) or (−) to be the same or opposed and hence additive or subtractive.

Hence it is possible to prepare a mixture in which the twist senses of the of the component are opposed and cancel each other out, whilst the polarisations are additive.

Liquid crystal mixtures which show a tilted S* ferroelectric liquid crystal phase, and which incorporate one or more compounds of the invention, either as dopant or host or both and optionally including one or more of the other compounds or types of compounds discussed above, constitute another aspect of the invention.

Liquid crystal ferroelectric materials incorporating a compound of the invention may be used in known liquid crystal electro-optical devices, e.g. processing, storage and display devices, which utilise the properties of S* mesophase.

An example of such a device is the "Clark Lagerwall Device", described in Reference 1, and also in "Recent Developments in Condensed Matter Physics" *4*, p.309, (1981) (Reference 3). The physics of this device, and methods of constructing one are well known. In practice such a device usually consists of two substrates, at least one of which is optically transparent, electrodes on the inner surfaces of the substrates and a layer of the liquid crystal material sandwiched between the substrates.

Such a device, when incorporating a compound of Formula I, also constitutes an aspect of the invention.

The Clark Lagerwall device uses a layer of liquid crystal material between the substrates of a thickness comparable to or less than the helical pitch of the S* configuration, which causes the helix to be unwound by surface interactions. In its unwound state the material has two surface stabilised states with director orientations (i.e. molecular tilt direction) at twice the tilt angle to one another, and also permanent dipole orientations perpendicular to the substrates but in opposite directions.

An alternative approach to providing cells for a Clark-Lagerwall device having a thicker layer of liquid crystal material is to use an applied electric field to induce homogeneous alignment through interaction with the dielectric anisotropy of the liquid crystal material. This effect requires a chiral smectic material having a negative dielectric anisotropy, e.g. provided by incorporation of a compound having a lateral halogen or cyano substituent. Such a compound may itself be chiral or non-chiral and smectic or non-smectic.

In general chiral smectic C materials ($S_C$*) are used in these displays because these are the most fluid, but in principle the more ordered chiral smectics could also be used. A pleochoric dye may also be incorporated in the liquid crystal material to enhance the electro-optic effect.

Such a device incorporating compounds of Formula I offers the possibility of a high switching speed of a few microseconds — as demonstrated in Reference 3 — together with bistable storage capability; and so is likely to have important applications in displays, optical processing devices, and optical storage devices. In particular this facilitates the construction of the electro-optical device in the form of a large screen, e.g. 30 cm by 20 cm, suitable for use in visual display units, portable computers etc.

Examples of the preparation and properties of compounds embodying the present invention will now be described. In the following examples certain abbreviations and symbols used having the following meanings:

| | |
|---|---|
| h | = hours; |
| g | = grammes; |
| mp | = melting point; |
| bp | = boiling point; |
| hplc | = high pressure liquid chromatography; |
| C—$S_{A,B,C}$ . . . | = crystalline solid to smectic A, B, C . . . liquid crystal transition temperature °C, |
| $[\alpha]^{24}_D$ | = optical rotation angle at 24°C using sodium-D line. |

Hosts: RCE8 is racemic

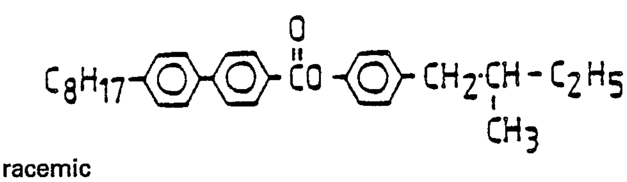

RPG495 is racemic

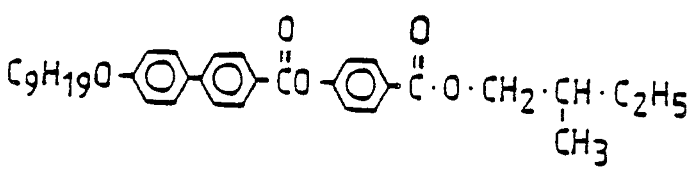

| | |
|---|---|
| Ps(nC $cm^{-2}$) | = Spontaneous Polarisation, |
| $\mu_{eff(D)}$ | = Magnitude of the effective dipole moment contributing to Ps, estimated using $\mu_{eff}$ = (Ps MW)/(NA ρ), |
| MW | = molecular weight, |
| NA | = Avogadro's number, |
| ρ | = density, taken to be 1000 $Kgm^{-3}$. |

Ps and $\mu_{eff}$ are extrapolated to 100 mol% concentration from mixtures containing approx. 10 mol% concentration.

All data on Ps, μeff, tilt angle, sense of polarisation is given at a temperature of 10°C below the $S_A$—$S_C$* transition unless otherwise stated.

The dopant's sense of polarisation is defined as in Fig. I.

Example 1

The preparation of compounds of generalised Formula:

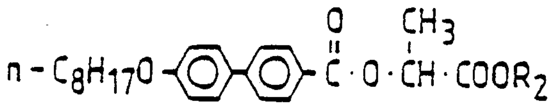

using route b.

*Step 1a: Preparation of (S)-propyl lactate*

To a stirred suspension of Amberlite IR-120(H) (20.0 g) in sodium-dried benzene (300 $cm^3$) was added (*S*)-(+)-lactic acid (53.0 g, 0.59 mol) and propanol (75.0 g, 1.25 mol). The stirred reaction mixture was then heated, under reflux conditions, for 5 h, with the water being collected in a Dean and Stark apparatus. When cooled, the resin was filtered off and washed with two portions (25 $cm^3$) of benzene. The benzene filtrate was then shaken with potassium carbonate (5.0 g), filtered and washed with a little benzene.

Distillation under reduced pressure (water pump) afforded the (*S*)-propyl lactate as a colourless liquid, 31.5 g (44%) bp 69—73°C (water-pump) from the nmr spectrum, the (*S*)-propyl lactate was still contaminated with propanol. This was removed by azeotropic distillation with toluene.

The product was then again distilled, under reduced pressure (water-pump) to afford the (*S*)-propyl lactate as a colourless liquid, 23.0 g (32%), bp 69—71°C (water pump). The product was free from propanol.

*Step 1b: Preparation of (S)-Propyl 2-(4'-octyloxy biphenyl-4-carbonyloxy) propanoate*

4'-n-Octyloxybiphenyl-4-carboxylic acid (5.9 g, 0.0153 mol) was gently heated, under reflux conditions, with an excess of freshly distilled thionyl chloride (30 $cm^3$) for 3 h. The unreacted thionyl chloride was removed by distillation under reduced pressure and the crude acid chloride was then dissolved in dry dichloromethane (10 $cm^3$). The solution of the acid chloride was then added, dropwise, to a stirred solution of the (*S*)-propyl lactate (2.25 g — prepared as in Step 1a) and dry triethylamine (2 $cm^3$) in dry dichloromethane (10 $cm^3$). The reaction mixture was then stirred at room temperature for 16 h.

The cold reaction mixture was diluted with dry dichloromethane (20 $cm^3$) and washed with dilute hydrochloric acid, water and then finally dried over magnesium sulphate.

The crude ester was purified by column chromatography on silica gel, using chloroform as the eluent. Several recrystallisations from ethanol afforded the (*S*)-propyl 2-(4'-octyloxybiphenyl-4-carbonyloxy) propanoate as a crystalline solid, 2.5 g (37%), mp 58°C.

The purity of the product was checked by hplc (reverse phase; various water/methanol mixtures). The chemical structure of the product was confirmed by a combination of the following techniques:

1. $^1$Hnmr spectroscopy (using a Jeol J NM-PM × 60 model spectrometer);
2. Infra-red spectroscopy (using a Perkin-Elmer 457 model grating spectrophotometer);
3. Mass spectrometry (using an AEI MS 902 model mass spectrometer).

The optical purity of the product was checked by nmr spectroscopy using chemical shift reagents.

Example 2

(*S*)-Ethyl 2-(4'-octyloxybiphenyl-4-carbonyloxy) propanoate was prepared by an analogous procedure to that of Example 1. The product, whose composition and purity were checked as in Example 1, showed $C—S_A$ = 39°C and $S_A—I$ = 42.0°C.

The (*S*)-ethyl lactate used in Example 2 was obtained commercially from Aldrich Chemical Co. Ltd., Gillingham, Dorset, U.K.

Example 3

(*S*)-methyl 2-(4'-octyloxybiphenyl-4-carbonyloxy) propanoate was prepared by an analogous procedure to that of Example 1. The composition and purity of the product were checked as in Example 1. The product showed C—I = 57°C and $S_A—I$ = (49.2°C) (monotropic).

The (*S*)-methyl lacetate used in Example 3 was obtained from Aldrich Chemical Co. Ltd., Gillingham, Dorset, U.K.

Example 4

(*S*)-n-Butyl 2-(4'-octyloxybiphenyl-4-carbonyloxy) propanoate was prepared by an analogous procedure to Example 1. The product, whose composition and purity were checked as in Example 1, showed a melting point of 51°C.

The (*S*)-n-Butyl lactate used in Example 4 was prepared in a manner analogous to Step 1a above. This compound was found to have a bp of 86—89°C (water pump).

Example 5
Method 2, Route C

*Step (i)* Preparation of

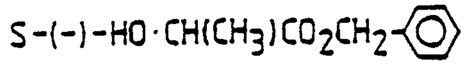

(A)

S-(+)-Lactic acid (188.0 g) was dissolved in methanol (360 $cm^3$) and water (40 $cm^3$) was added. The solution was titrated to pH 7.0 (pH meter or pH paper) with a 20% aqueous solution of caesium carbonate (ca. 160 $cm^3$). The solvent was removed under reduced pressure at 50°C and the residue was re-evaporated twice from N,N-dimethylformamide (DMF) (2 × 100 $cm^3$) at the same temperature. The white solid caesium salt obtained was stirred with benzyl bromide (34.2 g) in DMF (300 $cm^3$) for 15 h. The caesium salt was filtered off, the filtrate was concentrated and then ether was added to the residue (150 $cm^3$). The organic layer was washed successively with water (100 $cm^3$), saturated $NaHCO_3$ (500 $cm^3$) and water (100 $cm^3$) and finally dried ($MgSO_4$). After removal of the solvent, the residual liquid was distilled under reduced pressure to afford the product as colourless liquid, yield 28.8 g (80%), bp 96°C (0.05 mm Hg), $[\alpha]_D^{24}$ −12.9 (c 0.01, $CHCl_3$).

Note: Commercially available S-(+)-Lactic acid (Aldrich) was redistilled before it was used.

Ref. S. S. Wang, J.O.C., *41*, 3258 (1976).

*Step (ii)* Preparation of

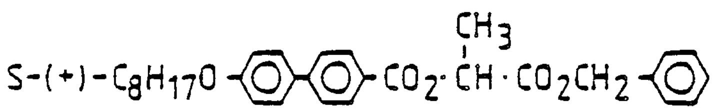

(B)

To a stirred mixture of 4-octyloxybiphenylyl-4′-carboxylic acid (10.8 g), S-(−)-benzyl lactate (A) (5.9 g) and 4-pyrrolidinopyridine (N-PPY) (0.49 g) in sieve-dried $CH_2Cl_2$ (250 $cm^3$), a solution of N,N-dicyclohexylcarbodiimide (DCC) (7.5 g) in sieve dried $CH_2Cl_2$ (50 $cm^3$) was added slowly. The reaction mixture was stirred for 5 h at room temperature. The N,N-dicyclohexylurea (DCU) was filtered off and the filtrate was washed successively with water (100 $cm^3$), 5% aqueous acetic acid (100 $cm^3$), water (2 × 100 $cm^3$) and finally dried ($MgSO_4$). After removal of the solvent, the crude diester was purified by column chromatography using silica gel and dichloromethane:petroleum fraction (bp 60—80°C) (4:1) as eluent. The product was crystallised from ethanol. Yield 11.1 g (69%), mp 62.5°C, $[\alpha]_D^{24}$ +24.7 (c 0.01, $CHCl_3$).

Ref. A. Hassner & V. Alexanian, Tetrahedron Letters *46*, 4475, (1978).

*Step (iii)* Preparation of

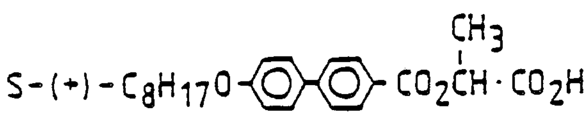

(C)

Compound (B) (11.0 g) was dissolved in ethyl acetate (150 $cm^3$), 5% Pd on charcoal (200 mg) was added and the mixture was stirred under an atmosphere of hydrogen overnight. After hydrogenation, (500 $cm^3$ of hydrogen consumed) was completed, the catalyst was filtered off and the filtrate was evaporated to dryness. The colourless solid residue (single spot by tlc) was crystallised from petroleum fraction (bp 60—80°C) to give the required carboxylic acid (C) as colourless needles. Yield 8.6 g (95%), mp 126°C, $[\alpha]_D^{24}$ +40.8° (c 0.01 $CHCl_3$).

*Step (iv)* Preparation of

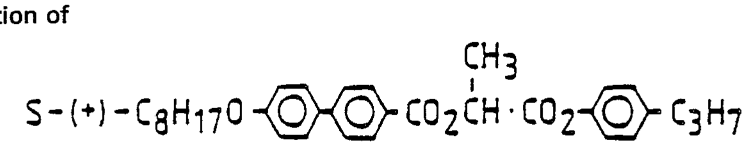

(D)

Compound (D) was prepared using the method of esterification as illustrated in step (ii) of Route C above, by taking compound (C), (1.1 g), 4-propylphenol (0.42 g), N-PPY (42 mg) and DCC (0.64 g) in sieve dried $CH_2Cl_2$ (35 $cm^3$). Yield 0.84 g (58%), mp 78.0°C, $[\alpha]_D^{24}$ +50.0° (c 0.01 $CHCl_3$).

Example 6
Method 3, Routes d and e

*Step (i)* Preparation of

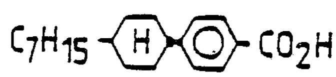

(E)

A solution of sodium hypobromite was prepared by dropwise addition of bromine (48.5 g) into a

solution of sodium hydroxide (44 g) in water (200 $cm^3$) at 5—10°C. This solution was then added slowly to a stirred solution of the ketone

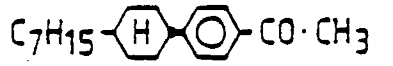 (20g)

in dioxan (300 $cm^3$) at a temperature of 50—55°C. When the addition was complete, the reaction mixture was stirred at 60—65°C for 30 min. The mixture was diluted with water (500 $cm^3$) and the organic solvent was distilled off. The residual hot mixture was filtered to remove unreacted ketone and the filtrate was allowed to cool to room temperature. The carboxylic acid salt was then acidified with concentrated hydrochloric acid and the crude acid obtained was filtered off, washed with water and dried in air. The product was crystallised from toluene. Yield 6.4 g (32%), liquid crystal transitions: C 161°C, Sc 190°C, N 190°C I.

Ref. A. I. Vogel "Textbook of Practical Organic Chemistry" 4th Edn., p.476 (1978) (pub. Longman Group Ltd.).

Route d

*Step (ii)* Preparation of

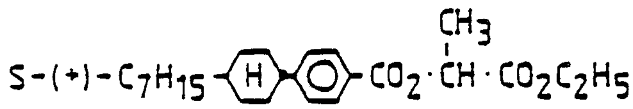 (F)

Compound (F) was prepared as described in Route c, step (ii) above, using Compound (E) (1.0 g), S-(−)-ethyl lactate (0.42 g), N-PPY (49 mg) and DCC (0.74 g) in sieve dried $CH_2Cl_2$ (35 $cm^3$). The product was crystallised from methanol at −78°C. Yield 0.80 g (60%), mp 25.0°C. $[\alpha]_D^{24}$ +19.5°C (c 0.01 $CHCl_3$).

Route e

*Step (iii)* Preparation of

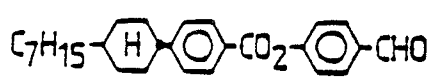 (G)

Compound (G) was prepared as described in Route c, step (ii) above using Compound (E) (2.2 g), 4-hydroxybenzaldehyde (0.98 g) N-PPY (37 mg) and DCC (1.65 g) in sieve dried $CH_2Cl_2$ (50 $cm^3$). The product was crystallised from ethanol. Yield 1.75 g (59%), C 94.5°, N 192.0°C I.

*Step (iv)* Preparation of

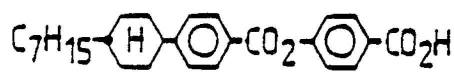 (H)

The oxidising agent was initially prepared by the dropwise addition of concentrated sulphuric acid (0.5 $cm^3$) to a stirred solution of chromium trioxide (0.42 g) in water (3.5 $cm^3$) at 0°C. A suspension of the aldehyde (G) (1.23 g) in acetone (15 $cm^3$) and benzene (8 $cm^3$) was cooled to 0—5°C and the oxidising agent prepared above was added dropwise with vigorous stirring, at such a rate that the temperature of the reaction mixture was maintained at about 20°C. The reaction mixture was stirred for 20 h at room temperature. The dark green reaction mixture was diluted with water (50 $cm^3$) and the organic solvents were removed in vacuo. Then 10% aqueous sulphuric acid (10 $cm^3$) was added and the precipitate was filtered off, washed with water until the washings were neutral to litmus, and then washed with a small amount of ethanol and dried in air. The product (single spot tlc) was crystallised from ethyl acetate. Yield 0.90 g (71%); C 21.0°C, S 225°C, N >300°C.

Ref. Org. Syn., *45*, 77 (1965).

*Step (v)* Preparation of

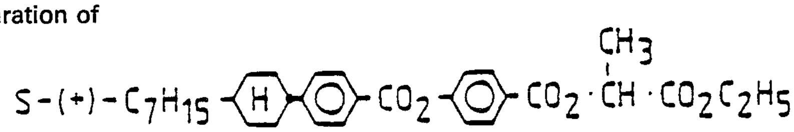 (I)

Compound (I) was prepared as described in Route c, step (ii) using Compound (H) (0.85 g), S-(−)-ethyl lactate (0.26 g), N-PPY (30 mg) and DCC (0.46 g) in sieve dried $CH_2Cl_2$ (30 $cm^3$). The product was crystallised from ethanol. Yield 0.55 g (53%). Liquid crystal transmissions: C (58.5°C) 83.0°C, $S_A$ 117.5°C, Ch 119.1°C, BP 120.0°C I (BP = Blue Phase), $[\alpha]_D^{24}$ +9.4° (c 0.01 $CHCl_3$).

Example 7
Method 4 Route f

*Step (ii)* Preparation of

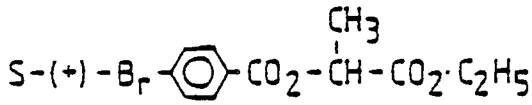

(J)

Compound (J) was prepared as described in Route c, step (ii) by taking 4-bromobenzoic acid (22 g), S-(−)-ethyl lactate (14.2 g), N-PPY (1.63 g) and DCC (25.0 g) in sieve dried $CH_2Cl_2$ (400 $cm^3$). The product was distilled under reduced pressure. Yield 20.1 g (61%), bp 118°C (0.05 mmHg), $[\alpha]_D^{24}$ +22.8 (c 0.01 $CHCl_3$).

*Step (i) and (iii)* Preparation of

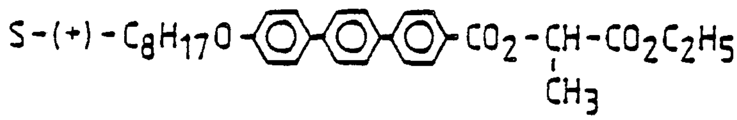

(K)

A solution of 9.5 M butyllithium in hexane (1.1 $cm^3$) in sodium dried ether (10 $cm^3$) was added dropwise to a stirred solution of 4-bromo-4′-octoxybiphenyl (3.4 g) in sodium dried ether (80 $cm^3$) at −10°C. After the addition was complete the reaction mixture was kept at −5 — −10°C for 45 min, and then a solution of anhydrous zinc chloride (1.9 g) in sodium dried THF (25 $cm^3$) was added over a period of 10 min and the reaction mixture was stirred for 1 h at room temperature.

The Pd catalyst was prepared in a separate flask by treating a solution of dichloro bis(triphenylphosphine) palladium (II) (0.26 g) in sodium dried THF (20 $cm^3$) with 1.0M diisobutylaluminium hydride in hexane (1.1 $cm^3$). To this catalyst were added Compound (J) (2.36 g) in sodium dried THF (10 $cm^3$) and the solution of 4-octoxy-biphenyl-4′-zinc chloride prepared above. The reaction mixture was diluted with ether (50 $cm^3$) and washed with 5% aqueous hydrochloric acid (30 $cm^3$) and water (2 × 50 $cm^3$) and dried ($MgSO_4$). After removal of the solvent, the product was purified by column chromatography using silica gel and chloroform:petroluem fraction (bp 60—80°C) (2:1) as eluent. The product was crystallised from ethanol. Yield 1.2 g (31%). Liquid crystal transitions: C 127.0°C, $S_C^*$ 158.5°C, $S_A$ 180.2°C I, $[\alpha]_D^{24}$ +33.4°C (c 0.01 $CHCl_3$).

Ref. E. Negishi, A. O. King and N. Okukado, J.O.C., *42*, (10), 1821 (1977).

Some properties of compounds of the invention prepared using the routes described above are listed in Tables 7 to 12 below:

TABLE 7

Compounds of the formula:

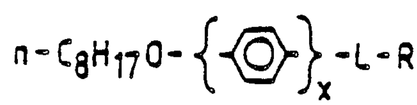

prepared by route c. Used in RCE8 host

| x | R | mp (°C) | $[\alpha]_D^{24}$ | Ps | $\mu_{eff}$ | Tilt Angle ° | Sense of Pol. |
|---|---|---|---|---|---|---|---|
| 1 | 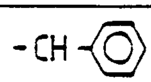 | 29 | +18.8 | — | — | — | — |
| 1 | 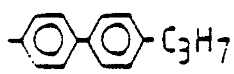 | 95 | +49.4 | | No Sc* phase in 10% soln bi-phase regions formed | | |
| 1 | 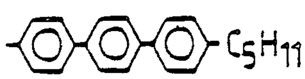 | 106.0 | +45.3 | — | | — | — |
| 2 | 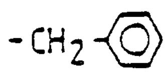 | 62.5 | +24.7 | 51 | 0.12 | 14.5 | (−) |
| 2 | 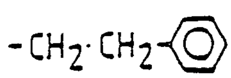 | 47 | +22.4 | 79.5 | 0.12 | 14.5 | (−) |

TABLE 7

| x | R | mp (°C) | $[\alpha]_D^{24}$ | Ps | $\mu_{eff}$ | Tilt Angle ° | Sense of Pol. |
|---|---|---|---|---|---|---|---|
| 2 | 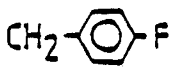 | 67 | +28.5 | 20 | 0.05 | 13.5 | (−) |
| 2 | 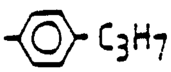 | 78 | +50 | 160 | 0.42 | *c*15 | (−) |
| 2 | 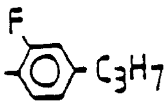 | 63.5 | +36.8 | 108 | 0.29 | 15.5 | (−) |
| 2 | 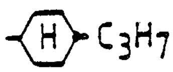 | 85.5 | +38.2 | 101 | 0.27 | *c*16 | (—) |
| 2 | 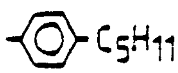 | 78 | +44.4 | 149 | 0.38 | 14 | (−) |
| 2 | 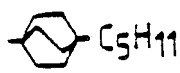 | 116.0 | +33.2 | 96 | 0.24 | 14 | (−) |
| 2 | 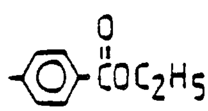 | 106 | +31.5 | — | — | — | — |
| 2 | 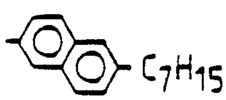 | 114 | +58.4 | 80* | 0.23 | 9* | (−) |
| 2 | H | 126 | +40.8 | — | — | — | — |
| 2 | —$CH_3$** | (C (49.2) $S_A$57 I) | | 67 | 0.14 | 16 | (−) |
| 2 | —$C_2H_5$** | (C (39.5) $S_A$42 I) | | 74 | 0.15 | 17 | (−) |
| 2 | —$C_4H_9$** | 51 | +33.4 | 75 | 0.15 | 13.5 | (−) |
| | | 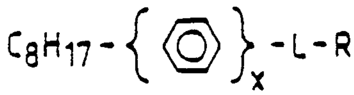 analogue : | | | | | |
| 2 | —$C_2H_5$ | — | — | 66 | 0.14 | 15 | (−) |

* figures measured 5°C below $S_A$—$S_C$ transition.
** prepared using route b also, see Examples 2, 3 and 4 above.

TABLE 8

Compounds of the formula:

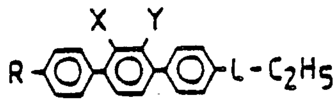

Prepared by route f above. Used in RCE8 host.

| R | X | Y | C—$S_C$, $S_A$ | $S_C$.$S_A$ | $S_A$—I | $[\alpha]_D^{24}$ | Ps | $\mu_{eff}$ | Tilt Angle ° | Sense of Pol |
|---|---|---|---|---|---|---|---|---|---|---|
| $C_8H_{17}O$ | F | H | 40 | — | 116 | +30.2 | 104 | 0.27 | 13.5 | (−) |
| $C_8H_{17}O$ | H | H | 127 | 158.5 | 180.2 | +33.4 | 99 | 0.25 | 15 | (−) |
| " | " | " | Pure material | | | | 124 | 0.31 | 24 | (−) |
| $C_5H_{11}$ | H | F | 66 ($S_B$) | 71 (B—A) | 116 | — | — | — | — | — |
| $C_5H_{11}$ | H | H | 130 (E) | {129 E—B; 147 B—A} | 180 | +37.6 | — | — | — | — |
| $C_9H_{19}$ | H | H | {68.5 ($S_1$—$S_2$)} {99.0 ($S_2$—$S_C$)} | {120 ($S_C$—$S_A$)} | {150.5 ($S_A$—I)} | +32.1 | — | — | — | — |
| $C_4H_9O$ | H | H | {185.0 (C—$S_E$)} | {186.5 ($S_E$—$S_A$)} | {225.0 ($S_A$—I)} | | | | | |

Miscellaneous liquid crystal transitions to denoted phases shown: { }

TABLE 9

Compounds of the formula:

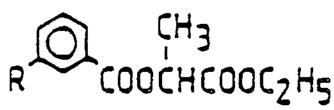

In RCE8 host. Prepared by route c.

| R | C—I | $S_C$—$C_A$ | $S_A$—I | Ps | $\mu_{eff}$ | Tilt Angle° | Sense of Pol | $[\alpha]_D^{24}$ |
|---|---|---|---|---|---|---|---|---|
| 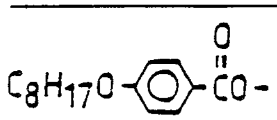 | 20 | — | — | — | — | — | — | +14.4 |
| 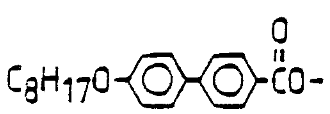 | 72 | (49) | (63.5) | 16 | 0.05 | c13.5 | (−) | +8.6 |

TABLE 10

Compounds of the formula:

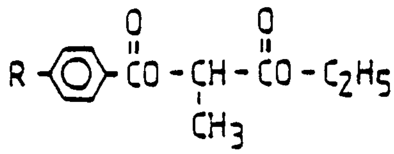

| R | C—$S_A$, I | $S_B$—$S_A$ | $S_A$—Ch | Ch—BP | BP*—I | $[\alpha]_D^{24}$ | Ps | Sense of Pol |
|---|---|---|---|---|---|---|---|---|
| 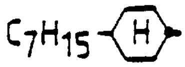 | 25 | — | — | — | — | +19.5 | 66 | (−) |
| 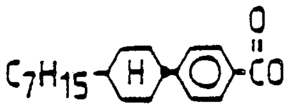 | 83 | (58.5) | 117.5 | 119.1 | 120 | +9.4 | — | — |

*BP = Blue phase

In RCE8 host, prepared using routes d and e.

TABLE 11

Compounds of the Formula:

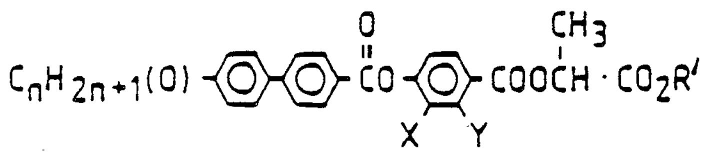

In RCE8 host 10% solution.

Alkoxy derivatives

| n | $R^1$ | X | Y | C—S, $S_C$ | S—$S_C$ | $S_A$—$S_C$ | $S_A$—Ch | $S_A$ CH—I | D/L* | Ps | Sense of Pol | Tilt Angle° |
|---|---|---|---|---|---|---|---|---|---|---|---|---|
| 8 | $C_2H_5$ | H | H | 75 | (62) | 117.5 | | 163 | L | | | |
| 9 | $C_2H_5$ | H | H | 60 | (45) | 122 | | 158 | L | 55.4 | (−) | 20.5 |
| 9 | $C_2H_5$ | Cl | H | 16* | −14 | 83.5 | | 117.5 | L | 56.5 | (−) | 20.0 |
| 9 | $C_2H_5$ | H | Cl | 47.5 | | 48 | 101.7 | 103.5 (Ch—I) | L | 47.8 | (−) | 24.2 |

*Crystal-crystal transition at 6°C.

Alkyl analogues

| n | $R^1$ | X | Y | C—S, $S_C$ | S—$S_C$ | S—$S_A$ | $S_A$—Ch | $S_A$ CH—I | D/L* | Ps | Sense of Pol | Tilt Angle |
|---|---|---|---|---|---|---|---|---|---|---|---|---|
| 8 | $C_2H_5$ | H | H | 49 ($S_A$) | $S_B$—$S_A$ | 48.5 | | 10 | | | | |
| 9 | $C_2H_5$ | H | H | 48.5 ($S_A$) | I$S_B$—$S_A$ | 46 | | 129.0 | | | | |
| 10 | $C_2H5$ | H | H | 57 | (35) | 72 | | 124 | L | 35.4 | (−) | 15.4 |
| 10 | $C_2H5$ | Cl | H | −2 | | 32 | | 83.5 | L | 29.2 | (−) | 15.1 |
| 10 | $C_2H5$ | H | Cl | 42 | | | 66 | 69 (Ch—I) | L | 35** | (−) | 17.2 |

* indicates Optical Chirality, Dextro (D) or Laevo (L)
** 20% solution in RCE 8

A terphenyl having the structure:

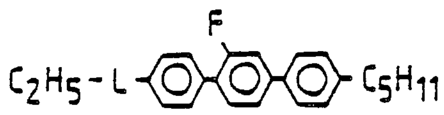

was also prepared, using route c. This compound had the properties: C—S 66°C $S_B$—$S_A$ 761°C, $S_A$—I 116°c.

A comparison was made of the properties of certain of the compounds described above in a second host material RPG495. These results are listed in Table 12 below:

TABLE 12

| Compound | Ps (1) | Ps (2) | Ps (3) | Tilt Angle | Sense of Pol |
|---|---|---|---|---|---|
| 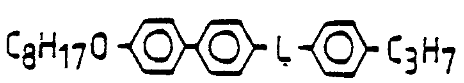 | 174 | 135 | 94 | — | — |
| 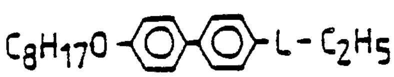 | 50 | 41 | 28 | 15.5 | (−) |
| 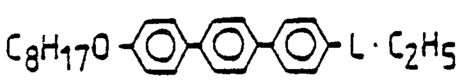 | 90 | 71 | 38 | — | (−) |

where Ps(1) measured 30°C below transition
Ps(2) „ 20°C „ „
Ps(3) „ 10°C „ „

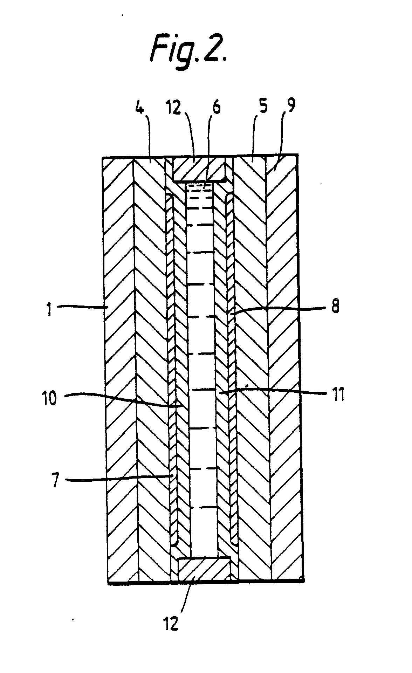

An example of the use of a compound of Formula I in a liquid crystal material and device embodying the present invention will now be described with reference to the accompanying drawing, Figure 2, which is a cross sectional end view of a liquid crystal shutter.

In Figure 2 a liquid crystal cell comprises a layer 6 of liquid crystal material exhibiting a chiral smectic phase sandwiched between a glass slide 4 having a transparent conducting layer 7 on its surface, e.g. of tin oxide or indium oxide, and a glass slide 5 having a transparent conducting layer 8 on its surface. The slides 4, 5 bearing the layers 7, 8 are respectively coated by films 10, 11 of a polyimide polymer. Prior to construction of the cell the films 10 and 11 are rubbed with a soft tissue in a given direction the rubbing directions being arranged parallel upon construction of the cell. A spacer 12, e.g. of polymethylmethacrylate, separates the slides 4, 5 to the required distance, e.g. 5 microns. The liquid crystal material 6 is introduced between the slides 4, 5 by filling the space between the slides 4, 5 and spacer 12 and sealing the spacer 12 in a vacuum in a known way.

A suitable liquid crystal composition for the material 6 is as follows:
Composition 1 comprising components 1, 2 and 3 as follows:

1. Racemic 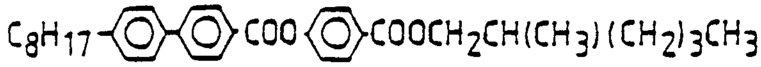 41.5 wt%

2. 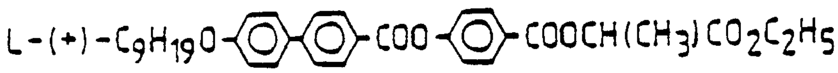 41.5 wt%

3. 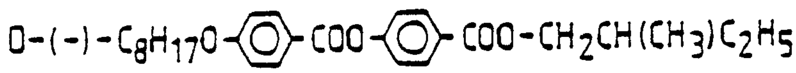 17 wt%

which as a room temperature S*c phase and an $S_C$—$S_A$ transition temperature of 66°C. L and D represent the sense of the optical activity and (+) and (−) represent the sense of polarisation. The Ps of this mixture was $25_n$ C $cm^{-2}$ at about 25°C.

A polarizer 1 is arranged with its polarization axis parallel to the rubbing direction on the films 10, 11 and an analyzer (crossed polarizer) 9 is arranged with its polarization axis perpendicular to that rubbing direction.

When a square wave voltage (from a conventional source not shown) varying between about +10 volts and −10 volts is applied across the cell by making contact with the layers 7 and 8 the cell is rapidly switched upon the change in sign of the voltage between a dark state and a light state as explained above.

In an alternative device (not shown) based on the cell construction shown in Figure 2, the layers 7 and 8 may be selectively shaped in a known way, e.g. by photoetching or deposition through a mask, e.g. to provide one or more display symbols, e.g. letters, numerals, words or graphics and the like as conventionally seen on displays. The electrode portions formed thereby may be addressed in a variety of ways which include multiplexed operation.

An alternative composition for use as the material 6 in the above described device is one contacting the following components in the proportions stated:

| Component formula: | Percentage by weight |
|---|---|
| 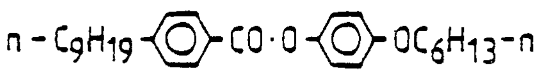 | 41.5 |
| 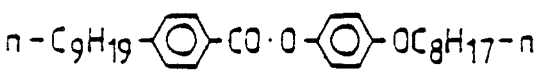 | 21 |
| 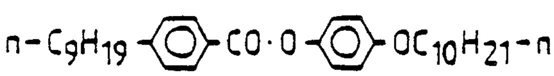 | 15.5 |
| 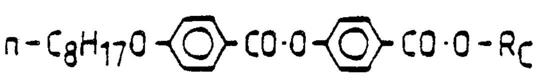 (racemic isomer) | 4 |
| 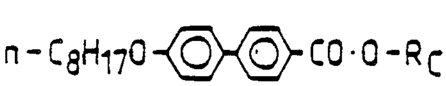 (racemic isomer) | 4 |
| 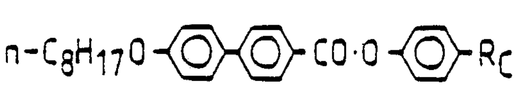 (racemic isomer) | 4 |
| 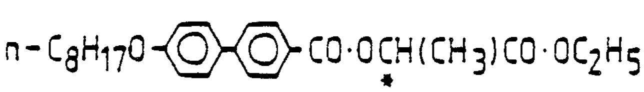 (*S*-isomer) | 10 |

where $R_C$ represents 2-methylbutyl.

**Claims**

1. A compound which may be used as a host or dopant in a ferroelectric chiral smectic liquid crystal mixture, the compound being a derivative of lactic acid and having a general formula:

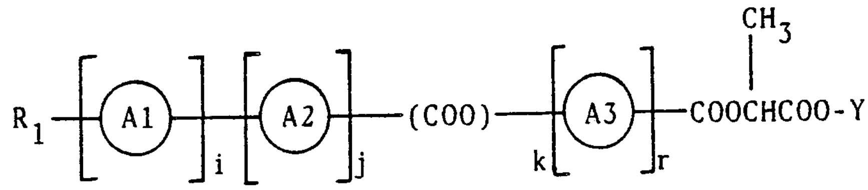

wherein 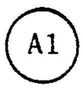 represents 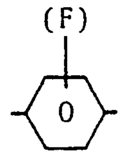 , 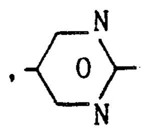 or 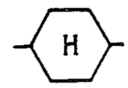 ;

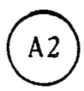 represents 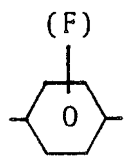 , and

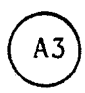 represents 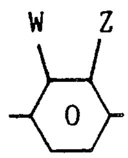 or 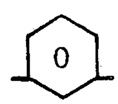 ;

wherein i, j, k and r are 0 or 1; wherein W and Z are independently selected from hydrogen or halogen; wherein Y represents a group selected from

$C_{1-20}$- alkyl, 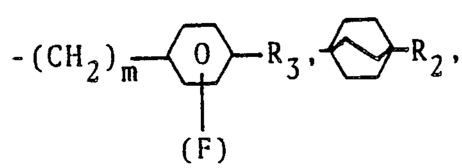 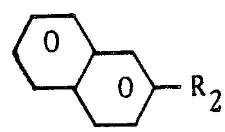

, 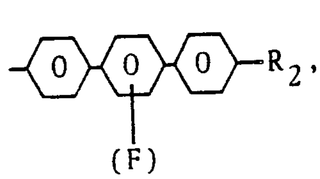 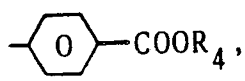 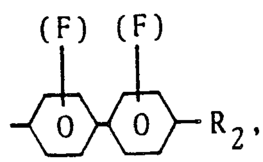 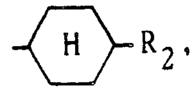

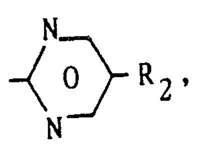 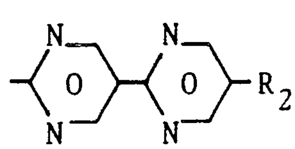

wherein $R_1$ and $R_2$ are independently hydrogen or alkyl or alkoxy together containing up to 25 carbon atoms, $R_3$ may be $R_2$ or halogen, $R_4$ is alkyl, (F) indicates that a fluorine substituent may be present on the ring, m is 0, 1 or 2;

provided that if r is 0 then k is 0; and provided that if

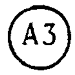 is 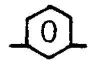

then k is 1 and if i is 1 then

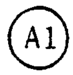 is 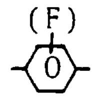 ;

and provided that if k is 0 and j is 1 then

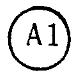 is not 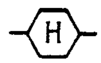 ;

and provided that the compound contains 2, 3 or 4 cyclic groups

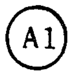 , 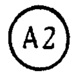 or 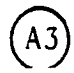

or the cyclic groups contained in Y.

2. A compound according to claim 1, characterised by having a general formula:

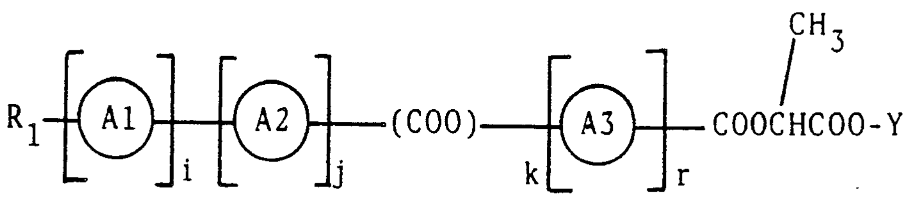

wherein

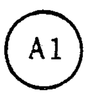 represents 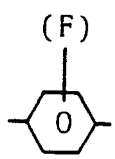 or 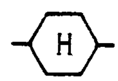 ,

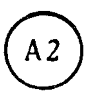 represents 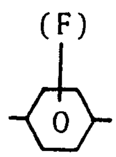 , and

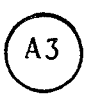 represents 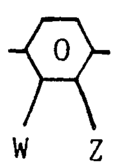 or 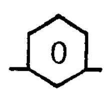 ;

wherein Y represents a group selected from

$C_{1-20}$- alkyl, 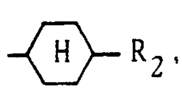 , 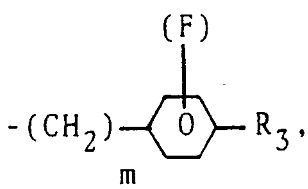 , 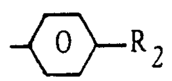 ,

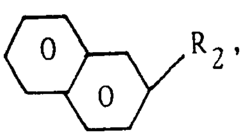 , 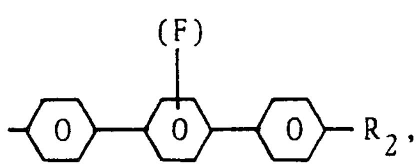 , and 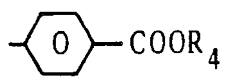 :

wherein variables i, j, k, r, W, Z, $R_1$, $R_2$, $R_3$, $R_4$ (F) and m are as defined in claim 1; provided that if r is 0 then k is 0; and provided that if

(A3) is 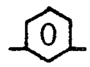

then k is 1 and if i is 1 then

(A1) is 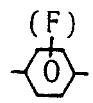 ;

and provided that if k is 0 and j is 1 then

(A1) is 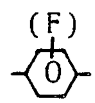 .

3. A compound according to claim 2, characterised by having a formula:

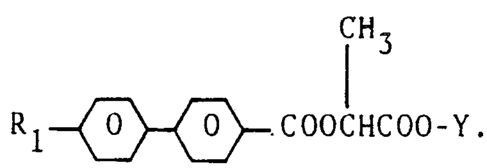

4. A compound according to claim 3, characterised in that Y is n-alkyl containing 1 to 5 carbon atoms.

5. A compound according to claim 3, characteristed in that Y is:

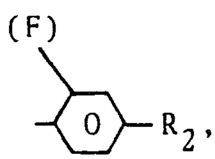 , 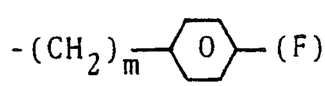 or 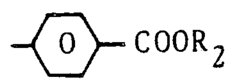

wherein (F) indicates that a fluorine substituent may be present and M is 0, 1 or 2.

6. A compound according to claim 3, characterised in that Y is:

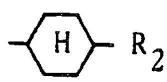

7. A compound according to claim 3 characterised in that Y is:

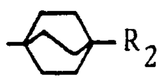 or 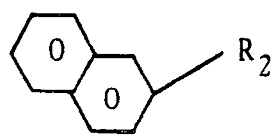

wherein $R_2$ is n-alkyl.

8. A compound according to claim 2 characterised by having a formula:

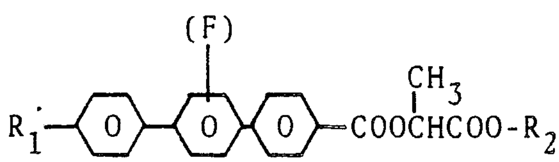

wherein $R_2$ is alkyl.

9. A compound according to claim 2 characterised by having a formula:

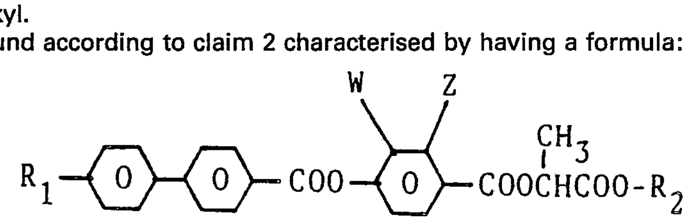

wherein W and Z are independently hydrogen or chlorine and $R_2$ is alkyl.

10. A compound according to claim 2 characterised by having a formula:

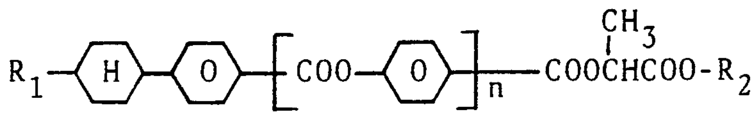

wherein n is 0 or 1 and $R_2$ is alkyl.

11. A compound according to claim 2 characterised by having a formula:

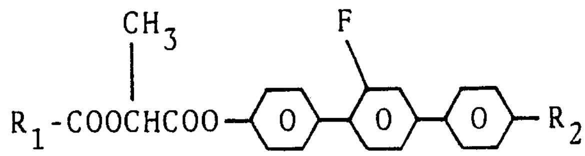

wherein $R_2$ is n-alkyl or n-alkoxy.

12. A compound according to claim 2 characterised by having a formula:

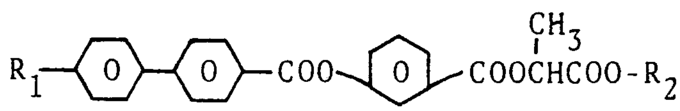

wherein $R_2$ is alkyl.

13. A compound according to any one of claims 2 to 12 characterised in that $R_1$ is n-alkyl or n-alkoxy containing 5 to 12 carbon atoms and $R_2$ is n-alkyl containing 1 to 5 carbon atoms.

14. A compound according to any one of claims 1 to 13, characterised that the compound is in a racemic form.

15. A liquid crystalline composition consisting of at least two compounds, characterised in that at least one is a compound as claimed in any one of claims 1 to 14.

16. An electro-optic device characterised in that it incorporates a liquid crystal composition as claimed in claim 15.

## Patentansprüche

1. Als Grund- oder Dotierungsstoff in einem ferroelektrischen chiralen smektischen Flüssigkristallgemisch verwendbare Verbindung, die ein Milchsäurederivat ist und die allgemeine Formel hat:

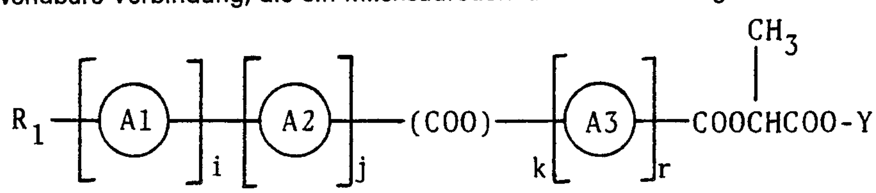

wobei (A1) darstellt: 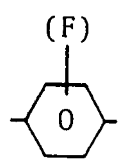 , 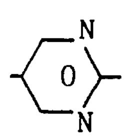 oder 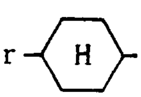 ;

(A2) darstellt: 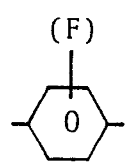 , und

(A3) darstellt: 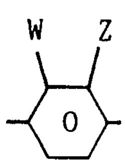 oder 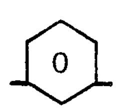 ;

wobei i, j, k und r jeweils 0 oder 1 sind, W und Z voneinander unabhängig aus Wasserstoff oder Halogen gewählt sind, wobei Y eine Gruppe darstellt, die ausgewählt ist aus:

$C_{1-20}$- Alkyl, 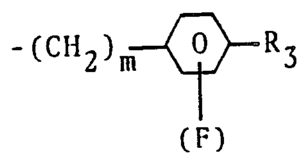 , 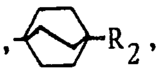 , 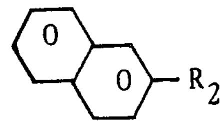 ,

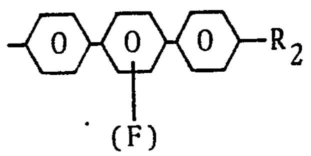 , 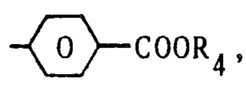 , 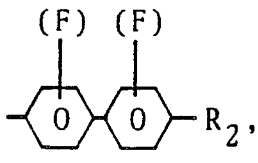 , 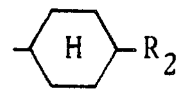 ,

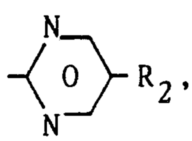 , 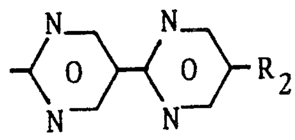

wobei $R_1$ und $R_2$ voneinander unabhängig Wasserstoff oder Alkyl oder Alkoxy mit zusammen bis zu 25 Kohlenstoffatomen sind, $R_3$ gleich $R_2$ oder Halogen sein kann, $R_4$ Alkyl ist, (F) anzeigt, daß ein Fluorsubstituent auf dem Ring vorhanden sein kann, m den Wert 0, 1 oder 2 hat, vorausgesetzt daß, falls r = 0, dann k = 0, und vorausgesetzt daß wenn

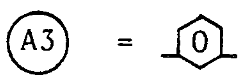 ,

dann k = 1, und falls i = 1, dann

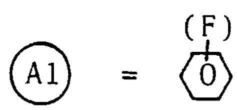 ,

und vorausgesetzt, daß falls k = 0 und j = 1, dann

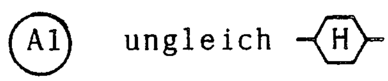 ,

und vorausgesetzt, daß die Verbindung 2, 3 oder 4 zyklische Gruppen

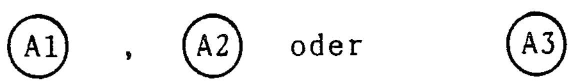

oder die in Y enthaltenen zyklischen Gruppen enthält.

2. Verbindung nach Anspruch 1, gekennzeichnet durch die allgemeine Formel:

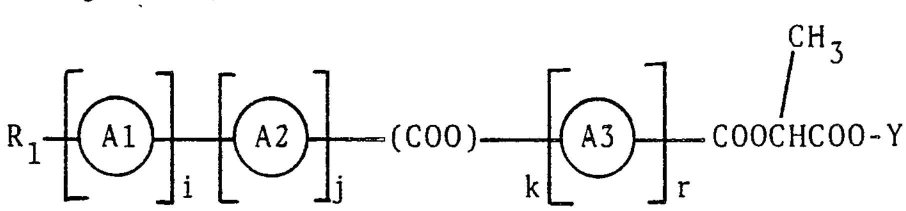

wobei

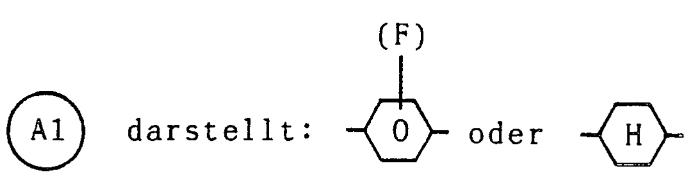 ,

A2 darstellt: 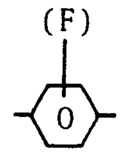 , und

A3 darstellt: 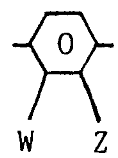 oder 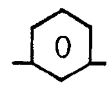 ;

wobei Y eine Gruppe darstellt, die ausgewählt ist aus:

$C_{1-20}$-Alkyl, 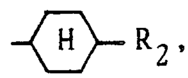 , 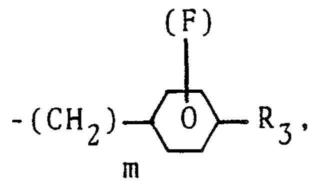 , 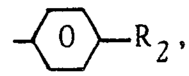 ,

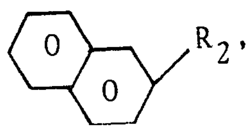 , 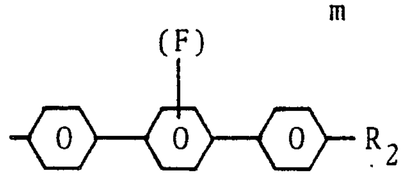 , und 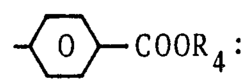 :

wobei die Variablen i, j, k, r, W, Z, $R_1$, $R_2$, $R_3$, $R_4$, (F) und m wie in Anspruch 1 sind, vorausgesetzt daß, falls r = 0, dann k = 0, und vorausgesetzt, daß wenn

A3 = 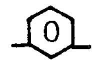 ,

dann k = 1, und falls i = 1, dann

A1 ist gleich 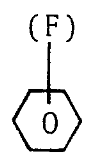 ,

und vorausgesetzt daß, falls k = 0 und j = 1, dann

A1 ist gleich 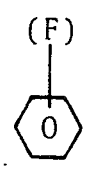 .

3. Verbindung nach Anspruch 2, gekennzeichnet durch die Formel:

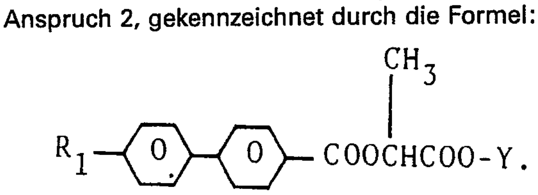

4. Verbindung nach Anspruch 3, dadurch gekennzeichnet, daß Y ein n-Alkyl mit 1 bis 5 Kohlenstoffatomen ist.

5. Verbindung nach Anspruch 3, dadurch gekennzeichnet, daß Y ist:

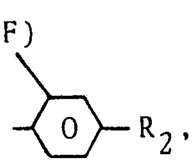 , 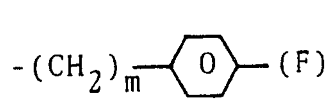 oder 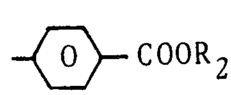

wobei (F) anzeigt, daß ein Fluorsubstituent anwesend sein kann, und wobei m = 0, 1 oder 2.

6. Verbindung nach Anspruch 3, dadurch gekennzeichnet, daß Y ist:

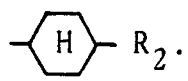

7. Verbindung nach Anspruch 3, dadurch gekennzeichnet, daß Y ist:

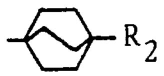

oder

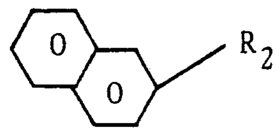

wobei $R_2$ ein n-Alkyl ist.

8. Verbindung nach Anspruch 2, gekennzeichnet durch die Formel:

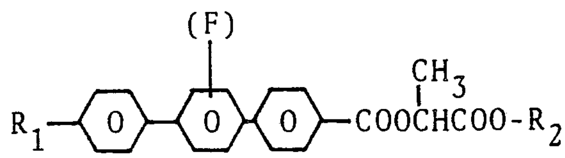

wobei $R_2$ ein Alkyl ist.

9. Verbindung nach Anspruch 2, gekennzeichnet durch die Formel:

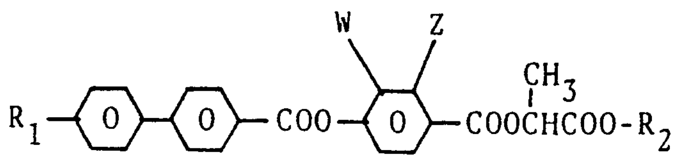

wobei W und Z unabhängig voneinander Wasserstoff oder Chlor sind und $R_2$ ein Alkyl ist.

10. Verbindung nach Anspruch 2, gekennzeichnet durch die Formel:

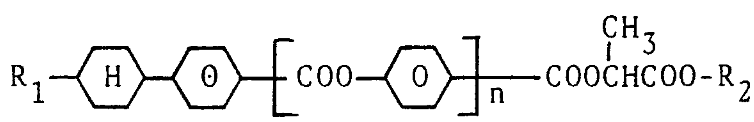

wobei n = 0 oder 1, und wobei $R_2$ ein Alkyl ist.

11. Verbindung nach Anspruch 2, gekennzeichnet durch die Formel:

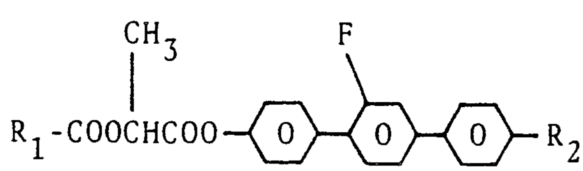

wobei $R_2$ ein n-Alkyl oder n-Alkoxy ist.

12. Verbindung nach Anspruch 2, gekennzeichnet durch die Formel:

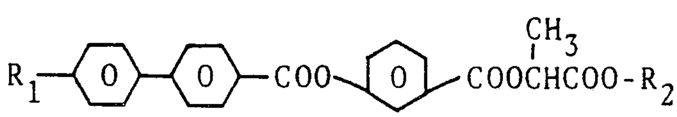

wobei $R_2$ ein Alkyl ist.

13. Verbindung nach einem der Ansprüche 2 bis 12, dadurch gekennzeichnet, daß $R_1$ ein n-Alkyl oder n-Alkoxy mit 5 bis 12 Kohlenstoffatomen und $R_2$ ein n-Alkyl mit 1 bis 5 Kohlenstoffatomen ist.

14. Verbindung nach einem der Ansprüche 1 bis 13, dadurch gekennzeichnet, daß die Verbindung in einer racemischen Form vorliegt.

15. Flüssigkristallzusammensetzung, bestehend aus mindestens zwei Verbindungen, dadurch gekennzeichnet, daß mindestens eine davon eine Verbindung nach einem der Ansprüche 1 bis 14 ist.

16. Elektrooptisches Gerät, dadurch gekennzeichnet, daß es eine Flüssigkristallzusammensetzung nach Anspruch 15 enthält.

**Revendications**

1. Composé qui peut être utilisé en tant qu'hôte ou dopant dans un mélange de cristaux liquides smectiques chiral ferroélectrique, le composé étant un dérivé de l'acide lactique et ayant une formule générale:

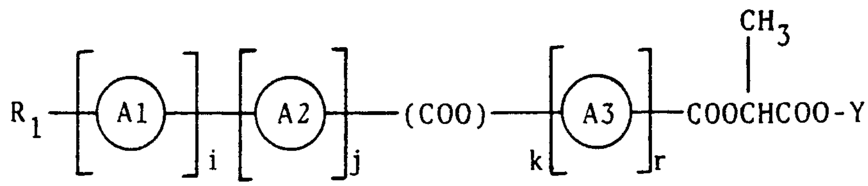

dans laquelle 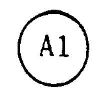 représente 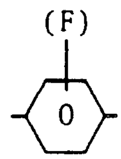, 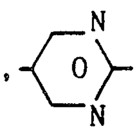 ou 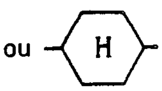 ;

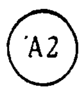 représente 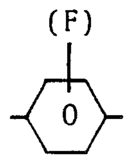, et

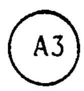 représente 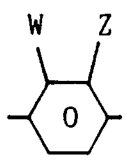 ou 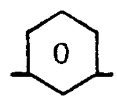 ;

dans laquelle i, j, k et r sont 0 ou 1; dans laquelle W et Z sont choisis indépendamment parmi l'hydrogène et un halogène; dans laquelle Y représente un groupe choisi parmi un alkyle en $C_{1-20}$,

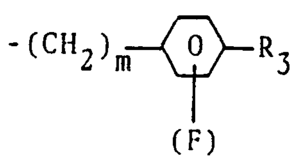, 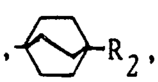, 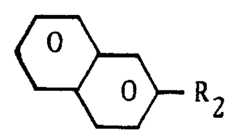

, 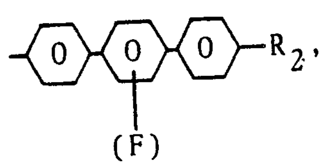, 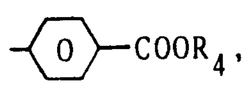, 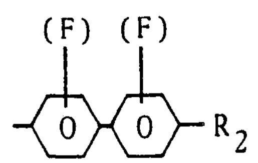, 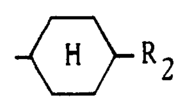,

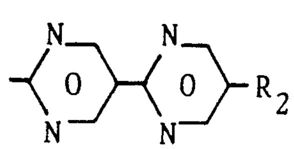 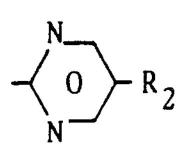,

dans lesquels $R_1$ et $R_2$ sont indépendamment l'hydrogène ou un alkyle ou alcoxy contenant ensemble jusqu'à 25 atomes de carbone, $R_3$ peut être $R_2$ ou un halogène, $R_4$ est un alkyle, (F) indique qu'un

substituant fluor peut être présent sur le cycle, m est 0, 1 ou 2; à condition que si r est égal à 0 alors k est égal à 0; et à condition que si

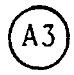 est 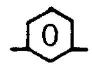

alors k est égal à 1 et que si i est égal à 1 alors

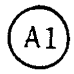 est 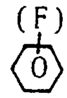 ;

et à condition que si k est égal à 0 et j est égal à 1 alors

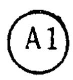 n'est pas égal à 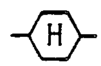 ;

et à condition que le composé contienne 2, 3 ou 4 groupes cycliques

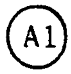 , 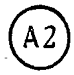 ou 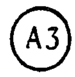

ou les groupes cycliques contenus dans Y.

2. Composé selon la revendication 1, caractérisé en ce qu'il a la formule générale:

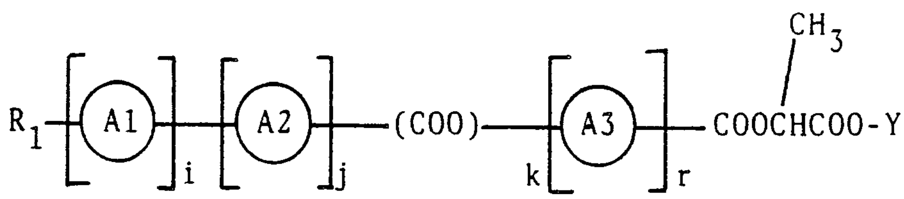

dans laquelle

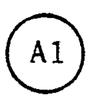 représente 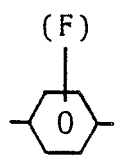 ou 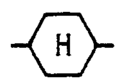 ,

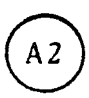 représente 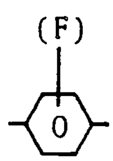 , et

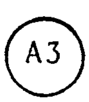 représente 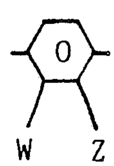 ou 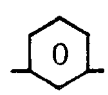 ;

dans laquelle Y représente un groupe choisi parmi un alkyle en $C_{1-20}$,

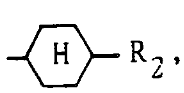 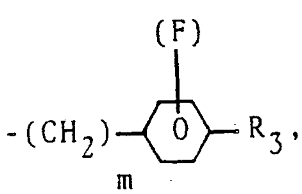 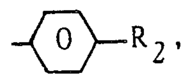 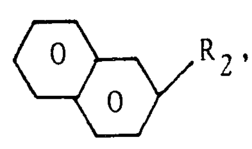

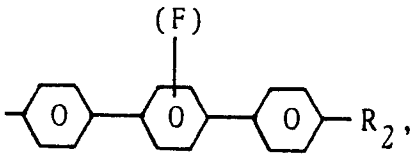 et 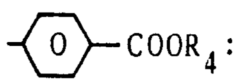

dans lesquels les variables i, j, k, r, W, Z, $R_1$, $R_2$, $R_3$, $R_4$, (F) et m sont tells que définies à la revendication 1; à condition que si r est égal à 0 alors k est égal à 0; et à condition que si

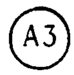 est 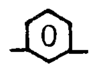

alors k est égal à 1 et si i est égal à 1 alors

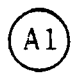 est égal à 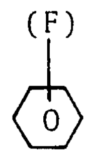 ;

et à condition que si k est égal à 0 et j est égal à 1 alors

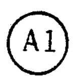 est égal à 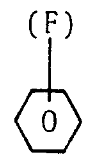 .

3. Composé selon la revendication 2, caractérisé en ce qu'il a la formule:

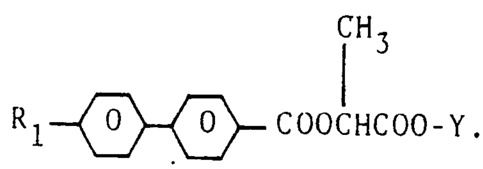

4. Composé selon la revendication 3, caractérisé en ce que Y est un n-alkyle contenant de 1 à 5 atomes de carbone.

5. Composé selon la revendication 3, caractérisé en ce que Y est:

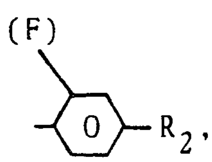 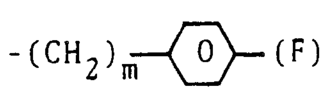 ou 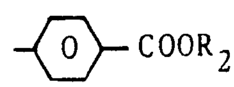

dans lesquels (F) indique qu'un substituant fluor peut être présent et M est égal à 0, 1 ou 2.

6. Composé selon la revendication 3, caractérisé en ce que Y est:

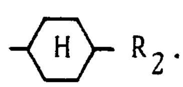

7. Composé selon la revendication 3, caractérisé en ce que Y est:

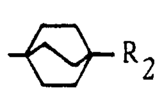 ou 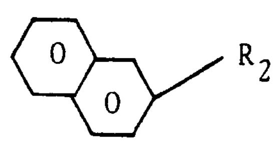

dans lesquels $R_2$ est un n-alkyle.

8. Composé selon la revendication 2, caractérisé en ce qu'il a la formule:

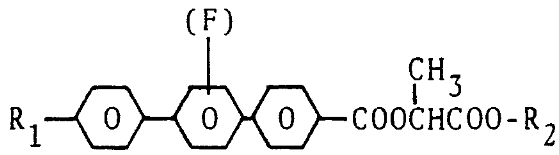

dans laquelle $R_2$ est un alkyle.

9. Composé selon la revendication 2, caractérisé en ce qu'il a la formule:

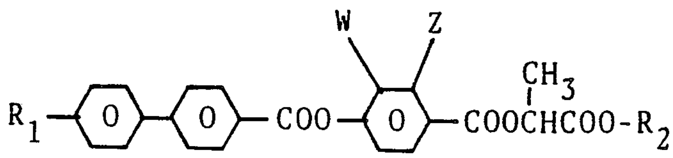

dans laquelle W et Z sont indépendamment l'hydrogène ou le chlore et $R_2$ est un alkyle.

10. Composé selon la revendication 2, caractérisé en ce qu'il a la formule:

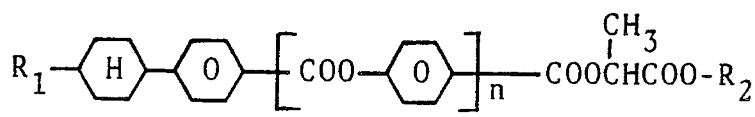

dans laquelle n est 0 ou 1 et $R_2$ est un alkyle.

11. Composé selon la revendication 2, caractérisé en ce qu'il a la formule:

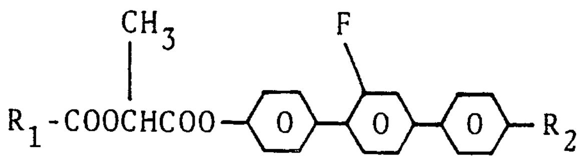

dans laquelle $R_2$ est un n-alkyle ou un n-alcoxy.

12. Composé selon la revendication 2, caractérisé en ce qu'il a la formule:

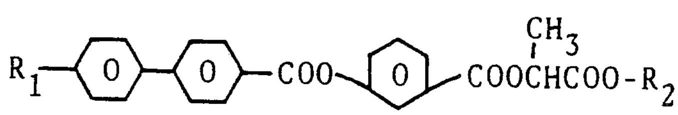

dans laquelle $R_2$ est un alkyle.

13. Composé selon l'une des revendications 2 à 12, caractérisé en ce que $R_1$ est un n-alkyle ou un n-alcoxy contenant de 5 à 12 atomes de carbone et $R_2$ est un n-alkyle contenant de 1 à 5 atomes de carbone.

14. Composé selon l'une des revendications 1 à 13, caractérisé en ce que le composé est sous une forme racémique.

15. Composé de cristaux liquides consistant en au moins deux composés, caractérisée en ce qu'au moins l'un des composés est un composé tel que revendiqué dans l'une des revendications 1 à 14.

16. Dispositif électro-optique caractérisé en ce qu'il comprend une composition de cristaux liquides telle que revendiquée à la revendication 15.

Fig.1.

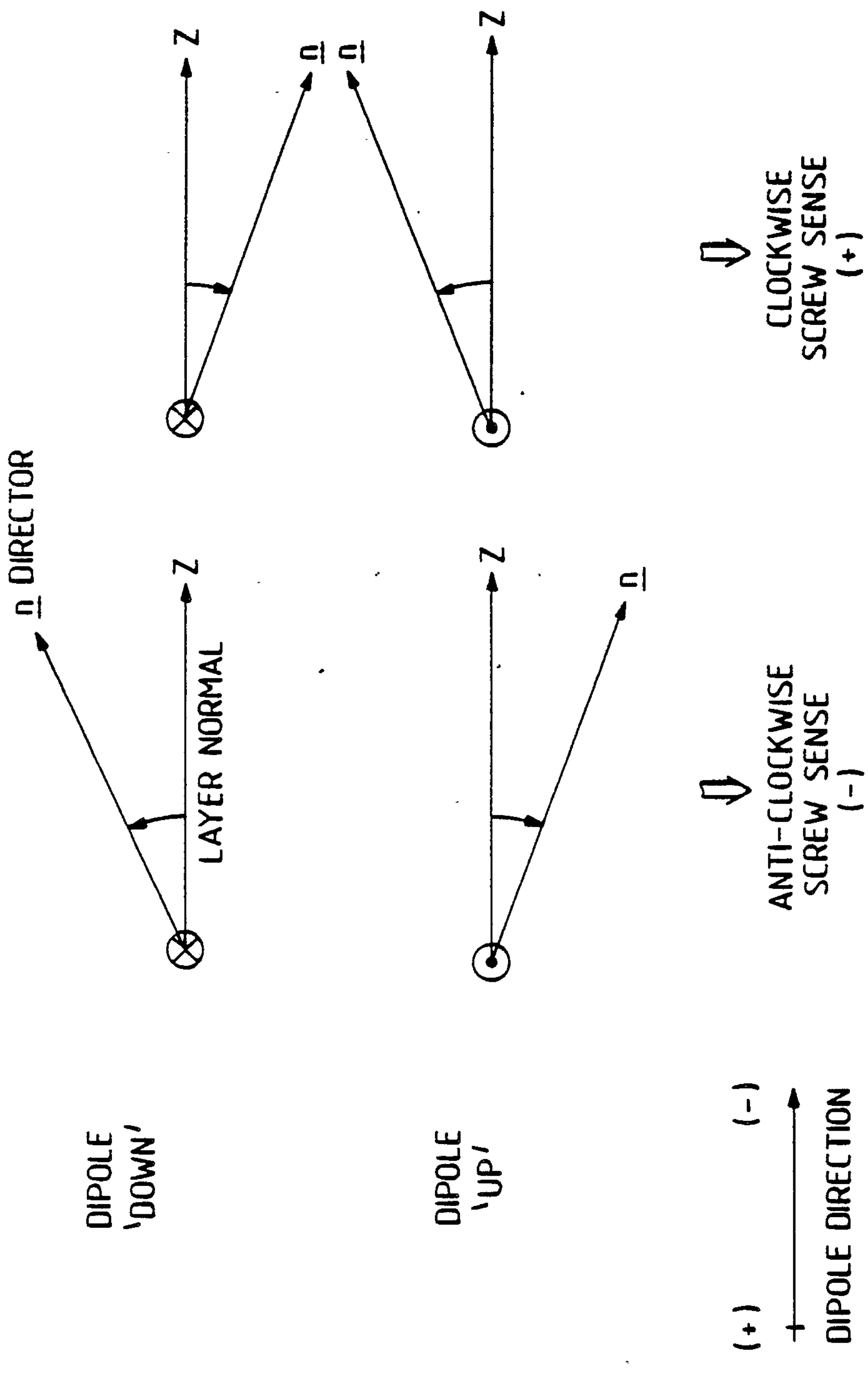
n DIRECTOR
LAYER NORMAL
Z
Z
Z
Z
n
n
n
DIPOLE 'DOWN'
DIPOLE 'UP'
ANTI-CLOCKWISE
SCREW SENSE
(-)
CLOCKWISE
SCREW SENSE
(+)
(+)
(-)
DIPOLE DIRECTION

Fig.2.